# EUROPÄISCHE PATENTSCHRIFT

(11) **EP 2 705 998 B1**
(45) Veröffentlichungstag und Bekanntmachung des Hinweises auf die Patenterteilung: **18.11.2015**
(21) Anmeldenummer: 13004391.2
(22) Anmeldetag: 10.09.2013
(51) Int. Cl.: B62D 21/15, F16F 7/12

(54) **Deformationselement zur Absorption kinetischer Energie, aus derartigen Elementen hergestellte Einheit sowie Verfahren zur Herstellung eines derartigen Elements**
Deformation element for absorbing kinetic energy, unit comprising such elements and a method for manufacturing such an element
Elément de déformation pour l'absorption d'énergie cinétique, unité fabriquée à partir de tels éléments et procédé de fabrication d'un tel élément

(30) Priorität: 10.09.2012 DE 102012017802
(43) Veröffentlichungstag der Anmeldung: 12.03.2014
(73) Patentinhaber: Institut für Verbundwerkstoffe GmbH, 67663 Kaiserslautern (DE)
(72) Erfinder: Schmeer, Sebastian, 67434 Neustadt (DE); Schmitt, Uwe, 67663 Kaiserslautern (DE); Pfaff, Thomas, 66892 Bruchmühlbach-Miesau (DE); Scheliga, David, 67663 Kaiserslautern (DE)
(74) Vertreter: Kurz, Andreas

(56) Entgegenhaltungen:
- DE-A1-102006 022 503
- DE-A1-102007 026 680
- DE-A1-102009 031 745
- DE-A1-102010 052 135
- GB-A- 1 464 031
- GB-A- 2 317 214
- NL-A- 7 606 621

## Beschreibung

Die Erfindung betrifft ein Deformationselement gemäß dem Oberbegriff des Patentanspruchs 1, eine aus derartigen Deformationselementen hergestellte Einheit gemäß dem Oberbegriff des Patentanspruchs 19 sowie ein Verfahren zur Herstellung eines Deformationselements gemäß dem Oberbegriff des Patentanspruchs 20.

Bewegte Körper besitzen in Abhängigkeit ihrer Geschwindigkeit und Masse eine bestimmte kinetische Energie, die im Falle einer Kollision mit anderen bewegten oder feststehenden Körpern ein hohes Maß an Schadpotential in sich birgt. Besondere Bedeutung kommt diesem Umstand bei Luft- und Kraftfahrzeugen zu, bei denen eine Kollision nicht nur zu Sachschäden führt, sondern von der Kollision auch Personen betroffen sind. Entsprechendes gilt für besondere technische Komponenten wie z.B. Treibstofftanks, Akkumulatoren, Steuerungsgeräte und dergleichen, von denen im Kollisionsfall ein hohes sekundäres Gefahre8.28npotential ausgeht. Es besteht daher ein starkes Interesse daran, die bei einer Kollision frei werdende kinetische Energie effektiv und schadensminimierend abzubauen.

Zum Schutz von Personen und technischer Ausrüstung besteht eine bekannte Maßnahme darin, die kinetische Energie der Kollisionspartner gezielt in Verformungsenergie umzuwandeln. So ist aus der DE 196 27 061 A1 ein Deformationselement für Kraftfahrzeuge bekannt, das einen aus Faserverbundwerkstoff bestehenden Rohrabschnitt umfasst, der bei einem Unfall mit einem eine konkave Hohlkehle aufweisenden Krafteinleitungselement zusammenwirkt. Im Zuge des Aufschiebens des Rohrabschnitts auf das Krafteinleitungselement kommt es zu einem Umstülpen des Rohrabschnitts im Bereich der konkaven Hohlkehle, wobei die Kohlenstofffasern des Verbundwerkstoffs brechen und die Aramidfasern umgebogen werden. Mit dem Umstülpvorgang wird ein beträchtlicher Teil der kinetischen Energie absorbiert. Probleme entstehen jedoch dann, wenn die Richtung der unfallbedingten Krafteinleitung nicht parallel zur Achse des Rohrabschnitts verläuft. In diesem Fall besteht die Gefahr des Knickbeulens, mit der Folge, dass das Deformationselement plötzlich versagt, ohne nennenswerte kinetische Energie zu absorbieren.

Ziel der DE 101 59 067 A1 ist es, eine Faserverbund-Crashstruktur mit hoher Strukturintegrität und vorbestimmbaren Crashverhalten zu schaffen. Dazu wird vorgeschlagen einen Hohlkörper aus einem Faserverbundmaterial mit Verstärkungselementen zu ergänzen. Die Verstärkungselemente können in die Wandung des Hohlkörpers eingearbeitet sein oder aber aus einem Stegprofil bestehen, das in der Längsachse des Hohlkörpers verläuft und mit seinen Längsrändern kraftschlüssig an die Hohlkörperwandung anschließt.

In der DE 195 22 575 A1 ist eine Aufprallvorrichtung für Fahrzeuge aus einem Faserverbundwerkstoff beschrieben, die auch unter Berücksichtigung eines weiten Aufprallwinkels bei einem off-axis Crash in der Lage sein soll, einen möglichst hohen Anteil der bei der Kollision freiwerdenden Aufprallenergie zu absorbieren. Dazu besitzt die Aufprallvorrichtung die Form eines Hohlkegelstumpfs, dessen durchmesserkleineres Ende mit einer Abschlusskappe versehen ist.

Sowohl die DE 101 59 067 A1 als auch die DE 195 22 575 A1 offenbaren dreidimensionale energieabsorbierende Hohlkörper, deren einzelne Zuschnitte im Zuge der Herstellung um einen entsprechend geformten Kern drapiert werden müssen, bevor eine Durchtränkung mit einer erhärtbaren Matrix erfolgt. Bei der räumlichen Formgebung im Zuge des Drapierens passen sich die zunächst noch flächig vorliegenden Lagen der vorgegebenen Form durch Scherung an, wobei es zu lokalen Winkeländerungen und Abstandsänderungen zwischen den Fasern der einzelnen Lagen kommt. Die aus dem Herstellungsverfahren resultierenden Einflüsse auf die späteren Festigkeitseigenschaften des Hohlkörpers erweisen sich als nachteilig und müssen bereits im Vorfeld der Fertigung konstruktiv berücksichtigt werden. Ein weiterer Nachteil ergibt sich aus dem verhältnismäßig hohen Arbeitsaufwand, der mit dem Drapieren verbunden ist.

Die DE 10 2007 026 680 A1 beschreibt ein Deformationselement mit einer in etwa dreieck- oder trapezförmigen Bodenplatte, deren formbarer Rand unter Bildung einer geraden Kante parabelförmig hochgezogen ist und in die in Richtung des hinteren Randes paarweise verlaufende rippenartige Profilstrukturen eingeformt sind. Die Profilstrukturen haben im Bereich des vorderen Randes einen deutlich gegenseitigen Abstand und laufen im Bereich des hinteren Randes aufeinander zu, der auf diese Weise einen wellenförmigen Verlauf erhält. Allerdings ist ein solches Deformationselement nicht allein durch Falten bzw. Umliegen zweidimensionaler Materialzuschnitte herstellbar.

Die DE 10 2010 052 135 A1 beschreibt eine Crashstruktur für Kraftfahrzeuge mit einem wellenförmigen Crashelement, das einen ersten Rand und einen zweiten Rand aufweist, die über eine von Mantellinien gebildete Mantelfläche miteinander verbunden sind. Die Wellen des Crashelements verlaufen in Crashrichtung und dienen der Aussteifung der Crashstruktur. Die Wellen weisen über ihre Länge allerdings eine einheitliche Höhe auf.

Vor diesem Hintergrund besteht die Aufgabe der Erfindung darin, gattungsgemäße Deformationselemente im Hinblick auf eine verbesserte Energieabsorption und möglichst einfache und wirtschaftliche Herstellung weiter zu entwickeln.

Diese Aufgabe wird durch ein Deformationselement mit den Merkmalen des Patentanspruchs 1, einer Einheit mit den Merkmalen des Patentanspruchs 19 und einem Verfahren mit den Merkmalen des Patentanspruchs 20 gelöst.

Vorteilhafte Weiterbildungen ergeben sich aus den Unteransprüchen.

Die Erfindung basiert auf dem Grundgedanken, ein am Ende des Herstellungsprozesses dreidimensionales Deformationselement aus einem flächigen, also zweidimensionalen Ausgangsmaterial zu schaffen. Die dem Fachmann zu diesem Zweck bekannten Verfahren sehen ein Umformen des Ausgangsmaterials im Wege des Tiefziehens oder Drapierens von Gewebelagen um einen Kern mit anschließendem Tränken mit einer Matrix oder ein Umformen von Organoblechen mit thermoplastischer Matrix vor. Mit dem Tiefziehen geht jedoch eine plastische Verformung des Materials einher, was zu unerwünschten örtlichen Materialausdünnungen führen kann. Beim Drapieren von Gewebelagen ändert sich die ursprüngliche relative Lage der Gewebefasern zueinander, was als Scherung bezeichnet wird, und was ebenfalls unerwünschte Dickenänderungen des Ausgangsmaterials nach sich ziehen kann.

Es ist das Verdienst der Erfindung, sich von diesen an sich bewährten Vorgehensweisen gelöst zu haben und ein dreidimensionales Deformationselement lediglich durch Falten, Umbiegen, Umlegen, Umschlagen bzw. Auslenken des flächigen Ausgangsmaterials aus seiner Ebene herzustellen. Daraus ergibt sich zunächst der Vorteil einer einfachen und schnellen Herstellung. Kostenintensive Maschinen zum Tiefziehen oder ein aufwändiges Drapieren der Fasergelege oder -gewebe sind nicht mehr notwendig, was einen bedeutenden wirtschaftlichen Vorteil gegenüber den bekannten Verfahren darstellt.

Das flächig vorliegende Ausgangsmaterial wird zur Bildung eines erfindungsgemäßen Deformationselements lediglich senkrecht zu seiner Ebene unter Bildungen von ersten und zweiten Ausbuchtungen ausgelenkt und in dieser Form verfestigt. Auf diese Weise wird ein formstabiler Bruchkörper geschaffen, ohne dabei in nennenswertem Umfang sich auf die mechanischen Eigenschaften auswirkende Gefügeveränderungen im Ausgangsmaterial hervorzurufen. Das Ausgangsmaterial besitzt also auch nach Bildung der Ausbuchtungen im Wesentlichen seine ursprüngliche Struktur. Dickenänderungen wie beim Tiefziehen oder Drapieren des Fasermaterials treten kaum auf, so dass sich die ursprünglichen mechanischen Eigenschaften des Ausgangsmaterials auch im daraus hergestellten Deformationselement wiederfinden, was sowohl die Planung als auch die Fertigung wesentlich vereinfacht.

Infolge der Längendifferenz zwischen dem ersten Rand und dem zweiten Rand des Materialzuschnitts bedingt eine Veränderung der ursprünglichen Form des Materialzuschnitts einen Materialüberschuss in der Mantelfläche des Bruchkörpers, der erfindungsgemäß dazu genutzt im Zuge der Auslenkung des Materialzuschnitts wellenartige erste und zweite Ausbuchtungen in der Mantelfläche zu erzeugen. Da der Materialüberschuss in Richtung des ersten Randes des Deformationselements zunimmt, weisen die ersten und zweiten Ausbuchtungen mit zunehmendem Abstand vom zweiten Rand eine größer werdende Höhe auf und die Länge der Schnittlinien der Mantelfläche in Schnittebenen senkrecht zu den Mantellinien nimmt mit zunehmenden Abstand der Schnittebenen vom zweiten Rand zu. Damit einher geht eine Vergrößerung der Schnittfläche, so dass mit zunehmendem Abstand vom zweiten Rand auch die maximal vom Deformationselement in der jeweiligen Schnittebene aufnehmbare Kraft anwächst; der Verformungswiderstand des Deformationselements nimmt also in Richtung des ersten Randes zu. Bei einem Unfall bildet sich daher zunächst im Bereich mit dem geringsten Verformungswiderstand eine Crashfront, die im Weiteren mit eindeutigem Verlauf und kontinuierlich in Richtung des ersten Randes voranschreitet. Ein solches Crashverhalten stellt sicher, dass eine vollständige und damit maximale Energieumwandlung erfolgt und gleichzeitig die Strukturintegrität des Deformationselements möglichst lange erhalten bleibt.

Die ersten und zweiten Ausbuchtungen bilden Versteifungsrippen aus, die einem erfindungsgemäßen Deformationselement eine ausgezeichnete Stabilität nicht nur in Richtung des Lastangriffs, sondern vor allem auch bei einem off-axis Crash verleihen, also wenn der Kollisionspartner aus einer Richtung schräg zur Längsachse des Deformationselements kommt. In diesem Fall verhindern die ersten und zweiten Ausbuchtungen ein ungewolltes Stabilitätsversagen durch Knickbeulen und stellen sicher, dass eine vollständige Energieumwandlung bei hoher Strukturintegrität gegeben ist. Der Verlauf der ersten und zweiten Ausbuchtungen ist beliebig, gemäß der Erfindung ist jedoch ein wellenartiger oder zickzackförmiger Verlauf bevorzugt.

Bei einer ersten Ausführungsform der Erfindung wird der mindestens eine Bruchkörper des Deformationselements aus einem ebenflächigen Materialzuschnitt in Form eines Bogens hergestellt, wobei die gekrümmten Längsseiten des Materialzuschnitts den ersten und zweiten Rand bilden. Wird der Materialzuschnitt aus seiner gebogenen Form in eine längsgestreckte Form gebracht, so ergibt sich ein Materialüberschuss zumindest im Bereich des längeren ersten Randes, aus dem erfindungsgemäß die ersten und zweiten Ausbuchtungen gebildet sind. Bei zusätzlicher Stauchung des Materialzuschnitts in Längserstreckungsrichtung ergibt sich zudem ein Materialüberschuss im Bereich des zweiten Randes, der ebenfalls zur Bildung von ersten und zweiten Ausbuchtungen genutzt werden kann, wenngleich die Ausbuchtungen im Bereich des zweiten Randes kleiner sind als im Bereich des ersten Randes. Aus dieser Art der Herstellung ergibt sich ein Deformationselement mit linearer Haupterstreckungsrichtung, dessen Länge zunächst von der Bogenlänge des Materialzuschnitts abhängig ist. Reicht die Bogenlänge eines kreisringförmigen Zuschnitts nicht aus, so können durch Ausbildung von Überlappungsstößen beliebig lange Deformationselemente gebildet werden. Alternativ können längere Deformationselemente auch aus einem Tape in Form eines wendel- bzw. schraublinienförmig verlaufenden Zuschnitts hergestellt sein.

Die vom Deformationselemente maximal absorbierbare Kraft kann durch die Anzahl der eingesetzten Bruchkörper voreingestellt werden. Bei einer bevorzugten Ausführungsform mit mehreren parallel ausgerichteten Bruchkörpern verlaufen die Ausbuchtungen des ersten Bruchelements synchron zu den Ausbuchtungen des zweiten Bruchelements, so dass die Bruchkörper sehr platzsparend ineinander geschachtelt werden können, was ein äußerst kompaktes Deformationselement ergibt. Zusätzlich kann der Raum zwischen den Bruchkörpern mit einem Stützschaum verfüllt sein. Der auf diese Weise realisierte sandwichartige Aufbau fixiert die Bruchkörper in ihrer gegenseitigen relativen Lage und vergrößert die Steifigkeit des Deformationselements.

Alternativ hierzu ist es möglich, zwei seitlich benachbarte Bruchkörper so zueinander anzuordnen, dass die Ausbuchtungen des ersten Bruchkörpers asynchron zu den Ausbuchtungen des zweiten Bruchkörpers verlaufen, das heißt, dass die Ausbuchtungen des ersten Bruchkörpers entgegengesetzt zu den Ausbuchtungen des zweiten Bruchkörpers angeordnet sind. Dabei bilden die einander zugewandten Ausbuchtungen der beiden Bruchkörper mit ihren Scheiteln Kontaktbereiche aus. Diese Ausführungsform der Erfindung ist aufgrund ihrer breiten Basis prädestiniert für Deformationselemente, die für off-axis Kollisionen bestimmt sind.

Um die Biegesteifigkeit eines erfindungsgemäßen Deformationselements zu steigern, beispielsweise wenn es zusätzlich einer Momentenbeanspruchung ausgesetzt ist, sieht eine weitere Ausführungsform der Erfindung vor, entlang des ersten und/oder zweiten Randes des Bruchkörpers eine Gurtung vorzusehen. Dem Bruchkörper kommt innerhalb dieser konstruktiven Ausbildung eine Doppelfunktion zu, da er sowohl zur Lastabtragung als auch Energieabsorption dient.

Gemäß einer weiteren Ausführungsform der Erfindung ist der Bruchkörper des Deformationselements spiralförmig geformt, wobei die Ausbuchtungen der einzelnen Umläufe ineinander zu liegen kommen. Durch den Wickelvorgang erhält das fertige Deformationselement eine zylinderartige Gestalt, so dass es sich vor allen zur Absorption hoher punktförmiger Lasten eignet. Die Anzahl der Wicklungen bestimmt dabei den Verformungswiderstand.

Eine wiederum andere Ausführungsform der Erfindung sieht vor, den Bruchkörper nach Art eines geschlossen Ringes auszubilden, das heißt die sich gegenüberliegenden mantellinienparallelen Ränder der Mantelfläche sind miteinander verbunden. Der Ring kann im Grundriss Ellipsenform oder Polygonform besitzen, wobei der erste Rand und gegebenenfalls auch der zweite Rand erste und zweite Ausbuchtungen aufweisen. Die auf diese Weise entstehenden Deformationskörper zeichnen sich dadurch aus, dass sie einen zu schützenden Gegenstand in ihrem Inneren aufnehmen können, der auf diese Weise besonders geschützt ist.

Eine weitere erfindungsgemäße Ausführungsform basiert auf einem ellipsoiden, insbesondere kreisförmigen, Materialzuschnitt, dessen Außenumfang den ersten Rand bildet. Innerhalb des ersten Randes ist der zweite Rand entweder entlang einer fiktiven Ellipsoids oder eines dementsprechenden tatsächlichen Ausschnitts definiert. Durch Umschlagen der Bereiche zwischen erstem Rand und zweitem Rand um den zweiten Rand entsteht ein Hohlkörper, dessen Mantelfläche den Bruchkörper bildet. Infolge des zunehmenden Materialüberschusses vom zweiten Rand in Richtung des ersten Randes ist es möglich in der Mantelfläche des Bruchkörpers erste radial nach außen weisende Ausbuchtungen und zweite radial nach innen weisende Ausbuchtungen auszubilden, deren Höhe zum ersten Rand hin zunimmt.

In vorteilhafter Weiterbildung dieser Ausführungsform wird vorgeschlagen, das Crashverhalten durch bestimmte Ausgestaltungen der ersten und zweiten Ausbuchtungen zu steuern. Werden größere Abweichungen der Krafteinwirkungsrichtung von der Längsachse des Deformationselements erwartet, so ist eine größere Neigung des Bruchkörpermantels gegenüber der Längsachse des Deformationselements vorteilhaft. Zu diesem Zweck können beispielsweise sowohl die Scheitel der ersten Ausbuchtungen als auch die Scheitel der zweiten Ausbuchtungen außerhalb der vertikalen Projektion des zweiten Randes am zweiten Ende des Deformationselements liegen. Vorteilhafterweise schließen dabei die einen Scheitel der zweiten Ausbuchtungen bildenden Mantellinien mit der Längsachse des Deformationselements einen Winkel α bis +20° ein, vorzugsweise bis +10°, und die einen Scheitel der ersten Ausbuchtungen bildenden Mantellinien einen Winkel β bis +45°, vorzugsweise bis +35°.

Mit zunehmender Annäherung der Krafteinwirkungsrichtung an die Längsachse des Deformationselements kann die Neigung des Bruchkörpermantels gegenüber der Längsachse geringer sein. Dabei ist es möglich, dass die Scheitel der zweiten Ausbuchtungen innerhalb oder auf der axialen Projektion des zweiten Randes liegen und die die Scheitel bildenden Mantellinien mit der Längsachse des Deformationselements beispielsweise einen Winkel α bis -20° bilden, vorzugsweise -5°. Bei oben genannten Winkelangaben bedeutet ein positives Vorzeichen, dass eine Mantellinie gegenüber einer Parallelen zur Längsachse des Deformationselements radial nach außen geneigt ist und ein negatives Vorzeichen, dass eine Mantellinie gegenüber einer Parallelen zur Längsachse des Deformationselements radial nach innen geneigt ist.

Ist eine bestimmte Krafteinwirkungsrichtung nicht vorhersehbar, so sieht eine vorteilhafte Ausführungsform der Erfindung vor, dass alle Scheitel der ersten Ausbuchtungen auf einem gemeinsamen äußeren Umfangskreis und/oder alle Scheitel der zweiten Ausbuchtungen auf einem gemeinsamen inneren Umfangskreis liegen. In diesem Fall ist also der Winkel α ist für alle zweite Ausbuchtungen und/oder der Winkel β ist für alle erste Ausbuchtungen einheitlich.

Ist hingegen die wahrscheinliche Krafteinwirkungsrichtung bekannt, so sieht eine bevorzugte Ausführungsform der Erfindung vor, die Winkel α und/oder β unterschiedlich groß auszubilden, wobei die die größten Winkel α, β bildenden Mantellinien näher an oder in der durch die Längsachse des Deformationselements und die Krafteinwirkungsrichtung aufgespannte Ebene liegen als Mantellinien, die kleinere Winkel α, β bilden.

Eine andere bei bekannter Krafteinwirkungsrichtung bevorzugte Maßnahme besteht darin, den ersten und/oder zweiten Rand mit in Längserstreckungsrichtung größerer Abmessung auszubilden als in Quererstreckungsrichtung, beispielsweise als Ellipse, Polygon oder Rechteck, wobei die Längserstreckungsrichtung wiederum in der durch die Längsachse des Deformationselements und die Krafteinwirkungsrichtung aufgespannte Ebene liegt.

Eine weitere vorteilhafte Ausführungsform der Erfindung sieht vor, dass der erste und/oder zweite Rand des Deformationselements mit einer Prallplatte versehen sind/ist. Zum einen wird dadurch die Verbindung zu anschließenden Bauteilen erleichtert. Zum anderen ist es möglich, mit Hilfe einer Prallplatte Ringzugkräfte, die durch die Schrägstellung des Bruchkörpermantels in den ersten Rand am ersten Ende eingetragen werden, aufzunehmen und ein radiales Aufspreizen des Deformationselements zu verhindern.

Gemäß einer besonders bevorzugten Ausführungsform der Erfindung ist innerhalb des Deformationselements ein weiterer Deformationskörper angeordnet. Dieser kann beispielsweise aus einem zylindrischen oder konischen Rohr bestehen oder einem zweiten erfindungsgemäßen Bruchkörper, mit gleicher oder entgegengesetzter Orientierung wie der erste Bruchkörper. Durch die zusätzliche Fläche wird zunächst das spezifische Energieaufnahmevermögen des Deformationselements erhöht. Zusätzlich kann durch geeignete Triggerung erreicht werden, dass sich die Crashfronten an den entgegengesetzten Enden bilden und in entgegengesetzten Richtungen bis zum anderen Ende fortschreiten. Auf diese Weise wird sichergestellt, dass die Strukturintegrität des Deformationselements im Falle eines Crashs möglichst lange erhalten bleibt.

Als Material für ein erfindungsgemäßes Deformationselement bevorzugt die Erfindung einen Faserkunststoffverbund, dessen Polymermatrix von Duroplasten, Thermoplasten, Elastomeren oder natürlichen Matrixwerkstoffen wie zum Beispiel Lignin gebildet sein kann. Die darin eingebetteten Fasern bestehen vorzugsweise aus Glasfasern, Karbonfasern, Aramidfasern, Naturfasern, Mineralfasern, Basaltfasern, Stahlfasern und dergleichen. Die Fasern können als Filamente oder Rovings in einer oder mehreren Lagen mit unidirektionaler Ausrichtung oder von Lage zu Lage abweichender Ausrichtung angeordnet oder als Stapelfasern in die Matrix eingebettet sein.

In vorteilhafter Weiterbildung der Erfindung werden eine Anzahl erfindungsgemäßer Deformationskörper zwischen einer gemeinsamen Grundplatte und gemeinsamen Deckplatte nebeneinander angeordnet. Auf diese Weise entsteht eine plattenförmige Deformationseinheit, die in der Lage ist, kinetische Energie großflächig zu absorbieren.

Die Erfindung wird nachstehend anhand in den Zeichnungen dargestellter Ausführungsbeispiele näher erläutert, wobei weitere Merkmale und Vorteile der Erfindung offenbar werden. Für gleiche und funktionsgleiche Merkmale werden dabei sinnentsprechende Bezugszeichen verwendet, soweit dies der Erleichterung des Verständnisses dient.

Es zeigt
- Fig. 1a: eine Schrägansicht einer ersten Ausführungsform eines erfindungsgemäßen Deformationselements,
- Fig. 1b: Draufsicht des in Fig. 1a dargestellten Deformationselements,
- Fig. 1c: eine Stirnansicht des in Fig. 1a dargestellten Deformationselements,
- Fig. 1d: eine Draufsicht auf den Materialzuschnitt des in Fig. 1a dargestellten Deformationselements,
- Fig. 2a: eine Schrägansicht einer zweiten Ausführungsform eines erfindungsgemäßen Deformationselements,
- Fig. 2b: eine Draufsicht des in Fig. 2a dargestellten Deformationselements,
- Fig. 2c: eine Stirnansicht des in Fig. 2a dargestellten Deformationselements,
- Fig. 3a: eine Schrägansicht einer dritten Ausführungsform eines erfindungsgemäßen Deformationselements,
- Fig. 3b: eine Draufsicht des in Fig. 3a dargestellten Deformationselements,
- Fig. 4a: eine Schrägansicht einer vierten Ausführungsform eines erfindungsgemäßen Deformationselements,
- Fig. 4b: eine Draufsicht des in Fig. 4a dargestellten Deformationselements,
- Fig. 5a: eine Schrägansicht einer fünften Ausführungsform eines erfindungsgemäßen Deformationselements,
- Fig. 5b: einen Horizontalschnitt durch das in Fig. 5a dargestellte Deformationselement entlang der in Fig. 5c dargestellten Linie V - V,
- Fig. 5c: eine Stirnansicht des in Fig. 5a dargestellten Deformationselements,
- Fig. 6: eine Schrägansicht einer sechsten Ausführungsform eines erfindungsgemäßen Deformationselements,
- Fig. 7a: eine Schrägansicht einer siebten Ausführungsform eines erfindungsgemäßen Deformationselements,
- Fig. 7b: eine Draufsicht des in Fig. 5a dargestellten Deformationselements,
- Fig. 7c: eine Stirnansicht des in Fig. 5a dargestellten Deformationselements,
- Fig. 7d: eine Draufsicht einer Anordnung mehrerer Deformationselemente gemäß der Fig. 7a bis 7c,
- Fig. 8a: eine Schrägansicht einer achten Ausführungsform eines erfindungsgemäßen Deformationselements,
- Fig. 8b: einen Vertikalschnitt durch das in Fig. 8a dargestellte Deformationselement entlang der in Fig. 8c dargestellten Linie VIII - VIII,
- Fig. 8c: eine Draufsicht des in Fig. 8a dargestellten Deformationselements,
- Fig. 9a: eine Schrägansicht einer neunter Ausführungsform eines erfindungsgemäßen Deformationselements,
- Fig. 9b: einen Vertikalschnitt durch das in Fig. 9a dargestellte Deformationselement entlang der in Fig. 9c dargestellten Linie IX - IX,
- Fig. 9c: eine Draufsicht des in Fig. 9a dargestellten Deformationselements,
- Fig. 10a: eine Schrägansicht einer zehnten Ausführungsform eines erfindungsgemäßen Deformationselements,
- Fig. 10b: einen Vertikalschnitt durch das in Fig. 10a dargestellte Deformationselement entlang der in Fig. 10c dargestellten Linie X - X,
- Fig. 10c: eine Draufsicht des in Fig. 10a dargestellten Deformationselements,
- Fig. 11a: eine Schrägansicht einer elften Ausführungsform eines erfindungsgemäßen Deformationselements in aufgebrochener Darstellung,
- Fig. 11b: einen Vertikalschnitt durch das in Fig. 11a dargestellte Deformationselement entlang der in Fig. 11c dargestellten Linie XI - XI,
- Fig. 11c: eine Draufsicht des in Fig. 11a dargestellten Deformationselements,
- Fig. 12a: eine Teilansicht auf eine aus einer Vielzahl erfindungsgemäßer Deformationselemente hergestellten ersten flächigen Einheit zur Energieabsorption,
- Fig. 12b: einen Schnitt durch die in Fig. 12a dargestellte Einheit entlang der dortigen Linie XII - XII,
- Fig. 13a: eine Teilansicht einer aus einer Vielzahl erfindungsgemäßer Deformationselemente hergestellten zweiten flächigen Einheit zur Energieabsorption,
- Fig. 13b: einen Schnitt durch die in Fig. 13a dargestellte Einheit entlang der dortigen Linie XIII - XIII, und die
- Fig. 14a,: b, c unterschiedliche Verfahrensschritte zur Herstellung eines erfindungsgemäßen Deformationselements.

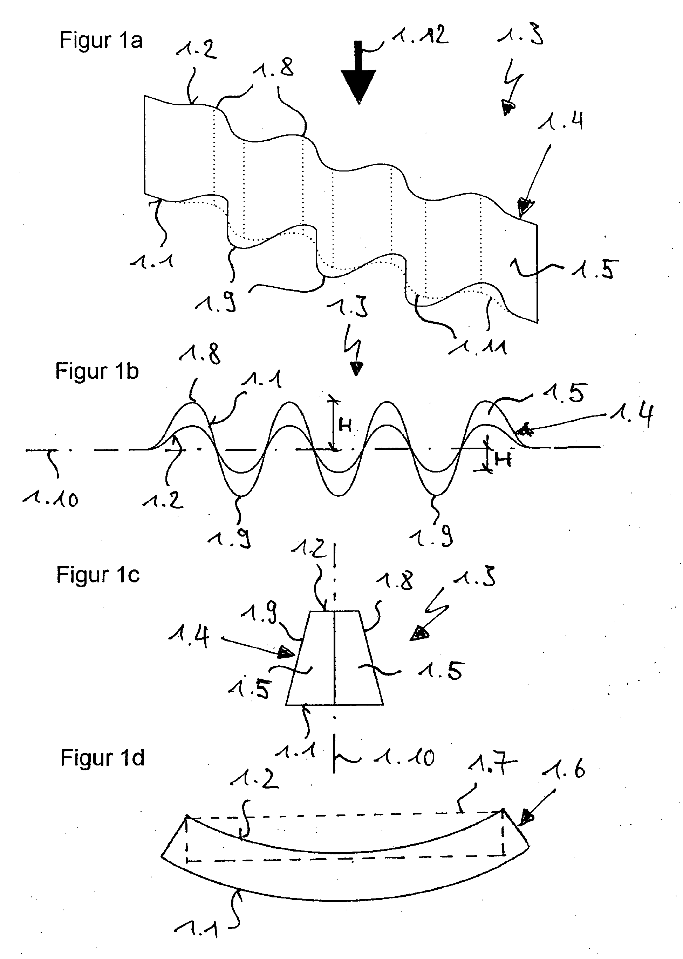

Gegenstand der Figuren 1a bis 1d ist eine erste einfache Ausführungsform eines erfindungsgemäßen Deformationselements 1.3, das im Wesentlichen vollständig aus einem Bruchkörper 1.4 aus einem Faserkunststoffverbund gebildet ist. Das Deformationselement 1.3 bzw. der Bruchkörper 1.4 besitzt eine streifenförmige Gestalt, dessen Längsseiten von einem ersten gewellten Rand 1.1 und einem zweiten gewellten Rand 1.2 gebildet sind. Die Summe aller den ersten Rand 1.1 und zweiten Rand 1.2 verbindenden Mantellinien ergibt die ebenfalls wellenförmig verlaufende Mantelfläche 1.5.

Das Deformationselement 1.3 ist aus einem wie in Fig. 1d dargestellten planen Materialzuschnitt 1.6 eines Fasermaterials hergestellt, beispielsweise eines Kohlenstofffaser- oder Glasfasergewebes oder -geleges. Der Materialzuschnitt 1.6 besitzt die Form eines Bogens, wobei dessen parallele Längsseiten den ersten Rand 1.1 und zweiten Rand 1.2 bilden. Wie aus Fig. 1d deutlich hervorgeht, ist der erste Rand 1.1 länger als der zweite Rand 1.2.

Um den Materialzuschnitt 1.6 in die in den Fig. 1a bis 1c dargestellte Form des Deformationselements 1. 3 zu bringen, wird der Materialzuschnitt 1.6 in eine durch die Strichelung 1.7 angedeutete längsgestreckte Gestalt mit linearer Ausrichtung gebracht, was beispielsweise durch Einlegen in eine entsprechend geformte Kavität eines Formwerkzeugs geschehen kann. Die damit einhergehende Verkürzung der Längsseiten in der Projektion führt zu einem Materialüberschuss über die Mantelfläche 1.5, der im Bereich des ersten Randes 1.1 aufgrund dessen größerer Länge größer ausfällt als im Bereich des kürzeren zweiten Randes 1.2.

Dieser Materialüberschuss wird gemäß der Erfindung dazu genutzt, in der Mantelfläche 1.5 erste Ausbuchtungen 1.8 und zweite Ausbuchtungen 1.9 zu erzeugen, wobei alle ersten Ausbuchtungen 1.8 bezüglich der Mittel- und Symmetrieebene 1.10 des Deformationselements 1.3 in die eine Richtung weisen und alle zweiten Ausbuchtungen 1.9 in eine dazu entgegengesetzte Richtung und die ersten Ausbuchtungen 1.8 in die zweiten Ausbuchtungen 1.9 übergehen. Infolge der Längendifferenz zwischen dem ersten Rand 1.1 und zweiten Rand 1.2 nimmt die Höhe H der ersten und zweiten Ausbuchtungen 1.8, 1.9 in Richtung des ersten Randes 1.1 zu, was in Fig. 1a durch die punktierte Linie 1.11 deutlich wird, die der Projektion des Verlaufs des zweiten Randes 1.2 in Richtung der Mittelebene 1.10 entspricht, oder in Figur 1b, wo die Höhe mit dem Bezugszeichen H gekennzeichnet ist.

Die Verfestigung des Deformationselements 1.3 geschieht im Zuge der Aushärtung der Kunststoffkomponente des Faserkunststoffverbunds, die bereits vorab als Imprägnierung im Fasermaterial vorhanden sein kann oder nach dem Schließen des Formwerkzeugs in die Kavität injiziert wird.

Bei einem Lastangriff in Richtung des Pfeils 1.12 werden die maximal aufnehmbaren Spannungen zunächst im Bereich des zweiten Randes 1.2 überschritten, da dort die zur Lastabtragung zur Verfügung stehende Querschnittsfläche aufgrund der geringeren Länge des zweiten Randes 1.2 am kleinsten ist. Es bildet sich also eine stabile CrashFront, die ausgehend vom zweiten Rand 1.2 sich in Richtung des ersten Randes 1.1 bewegt. Dabei bricht der Faserkunststoffverbund des Bruchkörpers 1.4, wobei die dafür aufzubringende Energie dem Maß der absorbierten Schadenergie entspricht.

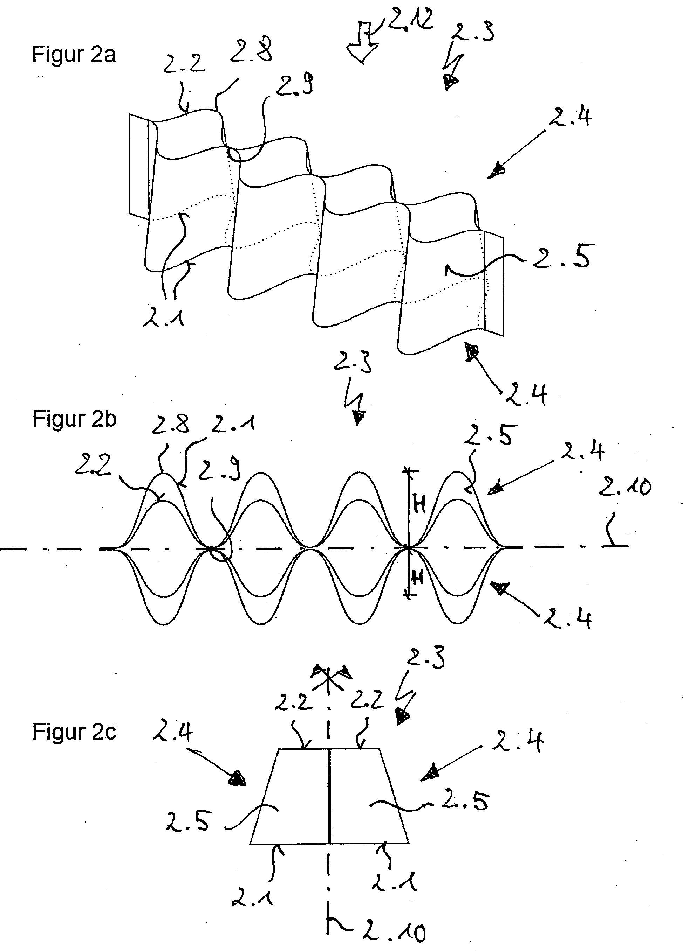

Die Figuren 2a bis 2c zeigen eine zweite Ausführungsform eines erfindungsgemäßen Deformationselements 2.3 mit zwei parallel verlaufenden und symmetrisch zur Symmetrieebene 2.10 angeordneten Bruchkörpern 2.4. Jeder Bruchkörper 2.4 entspricht weitestgehend dem unter den Fig. 1a bis 1d beschriebenen, so dass zur Vermeidung von Wiederholungen auf das dort Gesagte verwiesen wird. Der Unterschied besteht darin, dass die ersten Ausbuchtungen 2.8 im Bereich des ersten Randes 2.1 zwar eine größere Höhe aufweisen als im Bereich des zweiten Randes 2.2, die zweiten Ausbuchtungen 2.9 des ersten Randes 2.1 und zweiten Randes 2.2 jedoch eine gleiche Höhe besitzen. Daraus ergibt sich eine Gestalt der Bruchkörper 2.4, bei der die die Scheitel der zweiten Ausbuchtungen 2.9 bildenden Mantellinien in der Symmetrieebene 2.10 des Deformationselements 2.3 liegen, während die die Scheitel der ersten Ausbuchtungen 2.8 bildenden Mantellinien gegenüber der Symmetrieebene 2.10 geneigt sind.

Charakteristisch für das Deformationselement 2.3 ist die symmetrische Anordnung zweier Bruchkörper 2.4 bezüglich der Symmetrieebene 2.10, so dass zwei sich senkrecht zur Symmetrieebene 2.10 gegenüberliegende Ausbuchtungen 2.8, 2.9 eine entgegengesetzte Orientierung aufweisen. Dadurch bilden die ersten Ränder 2.1 beider Bruchkörper 2.4 eine breite Basis des Deformationselements 2.3 aus, die vor allem bei off-axis Lastangriffen von Vorteil ist.

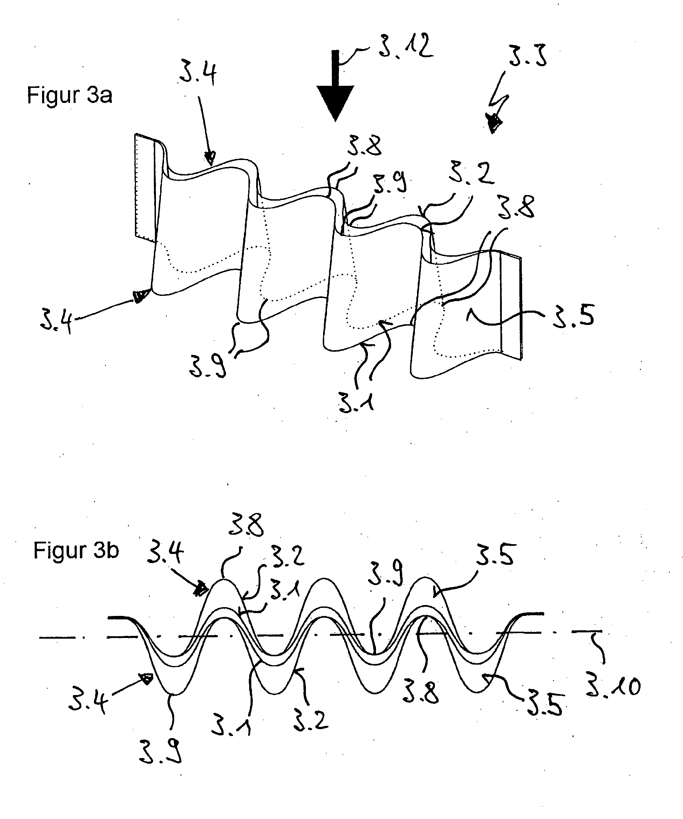

Das in den Fig. 3a und 3b dargestellte Deformationselement 3.3 entspricht in seiner Ausbildung weitgehend der unter den Fig. 2a bis 2c beschrieben Ausführungsform, so dass die dortigen Ausführungen entsprechend gelten. Im Gegensatz zum Deformationselement 2.3 sind die beiden Bruchkörper 3.4 des Deformationselements 3.3 jedoch in Richtung der Längserstreckung 3.10 des Deformationselements 3.3 gegeneinander verschoben, so dass senkrecht zur Längserstreckungsrichtung 3.10 gegenüberliegende erste und zweite Ausbuchtungen 3.8, 3.9 synchron verlaufen, das heißt dieselbe Orientierung besitzen. Das ermöglicht eine kompakte Ausbildung des Deformationselements 3.3 durch eine verschachtelte Anordnung der beiden Bruchkörper 3.4, bei der die ersten und zweiten Ausbuchtungen 3.8, 3.9 ineinander liegen.

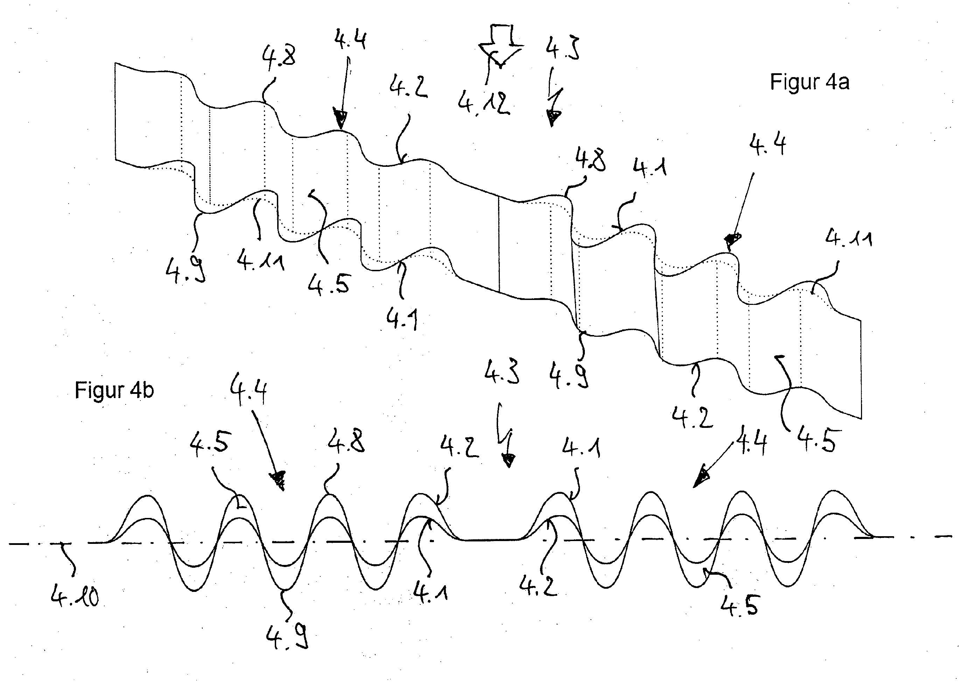

Die Fig. 4a und 4b betreffen eine Ausführungsform der Erfindung bei der das Deformationselement 4.3 von zwei in Längserstreckungsrichtung 4.10 aneinander gefügten und miteinander verbundenen Bruchkörpern 4.4 zusammengesetzt ist. Jeder Bruchkörper 4.4 entspricht dem unter den Figuren 1a bis 1d beschriebenen Bruchkörper 1.4, wobei in der vorliegenden Ausführungsform zwei in Längserstreckungsrichtung 4.10 aufeinanderfolgende Bruchkörper 4.4 derart zueinander angeordnet sind, dass der erste Rand 4.1 des einen Bruchkörpers 4.4 in den zweiten Rand 4.2 des anderen Bruchkörpers 4.4 übergeht und umgekehrt, die Bruchkörper 4.4 also um die Achse ihrer Längserstreckung 4.10 um 180° gegeneinander verdreht sind. Diese Ausführungsform führt dazu, dass sich bei einem Lastangriff die Crash-Fronten der beiden Bruchkörper 4.4 von unterschiedlichen Seiten ausgehend entwickeln.

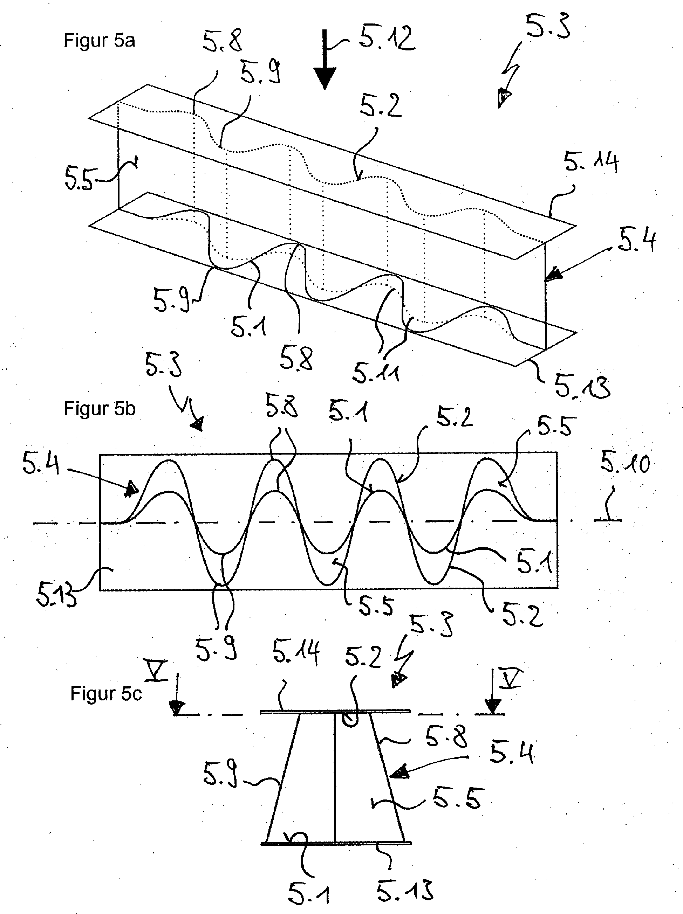

Das erfindungsgemäße Deformationselement 5.3 gemäß der Fig. 5a bis 5c basiert ebenfalls auf dem unter den Fig. 1a bis 1d beschriebenen Bruchkörper 1.4, der innerhalb des Deformationselements 5.3 das Bezugszeichen 5.4 trägt. Die Besonderheit liegt dabei in der Ergänzung des Bruchkörpers 5.4 mit einem ersten Gurt 5.13, der sich parallel zur Längserstreckungsrichtung 5.10 entlang des ersten Randes 5.1 erstreckt und mit einem zweiten Gurt 5.14, der parallel zur Längserstreckungsrichtung 5.10 entlang des zweiten Randes 5.2 verläuft. Beide Gurte 5.13 und 5.14 sind kraftschlüssig mit dem Bruchkörper 5.4 verbunden, so dass auf diese Weise ein balkenartiges, in Längserstreckungsrichtung 5.10 biegesteifes Deformationselement 5.3 entsteht.

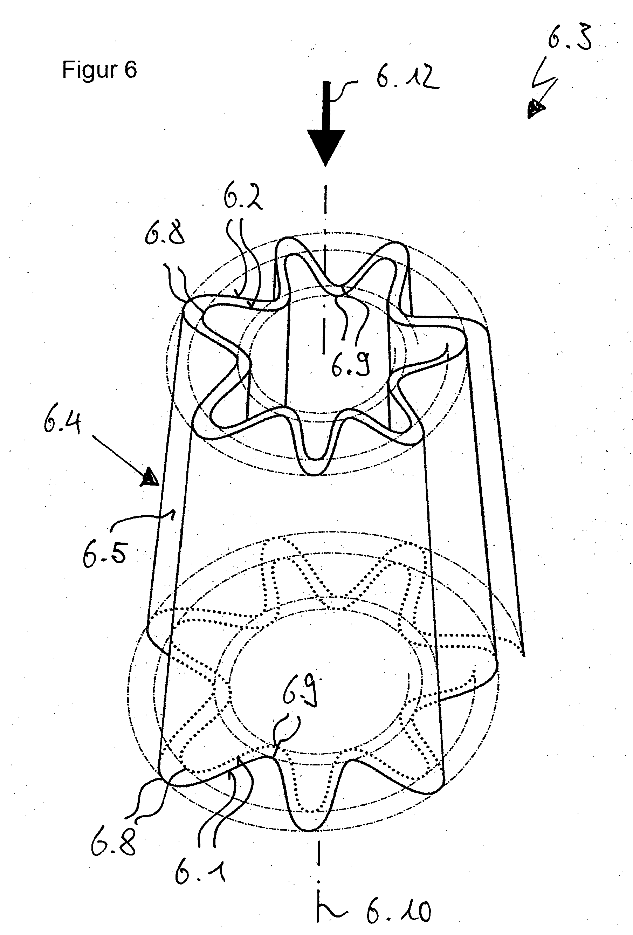

Fig. 6 betrifft eine Ausführungsform der Erfindung mit einem Deformationselement 6.3, das im Wesentlichen von einem um eine Längsachse 6.10 geformten Bruchkörper 6.4 gebildet ist. Der Bruchkörper 6.4 entspricht im Wesentlichen wiederum dem unter den Figuren 1a bis 1d beschriebenen, der jedoch im Gegensatz dazu keine lineare Längserstreckung besitzt, sondern mehrfach spiralförmig um die Längsachse 6.10 gewickelt ist. Dabei verlaufen die ersten radial nach außen weisenden Ausbuchtungen 6.8 und die zweiten radial nach innen weisenden Ausbuchtungen 6.9 des ersten Randes 6.1 und zweiten Randes 6.2 eines jeden Umlaufs parallel, so dass sich radial gegenüberliegende Ausbuchtungen 6.8, 6.9 ineinander verschachtelt angeordnet sein können. Auf diese Weise entsteht ein zylindrischer oder konischer Hohlkörper, dessen Anzahl an Umläufen den Verformungswiderstand und damit die maximal aufnehmbare Schadenergie bestimmt.

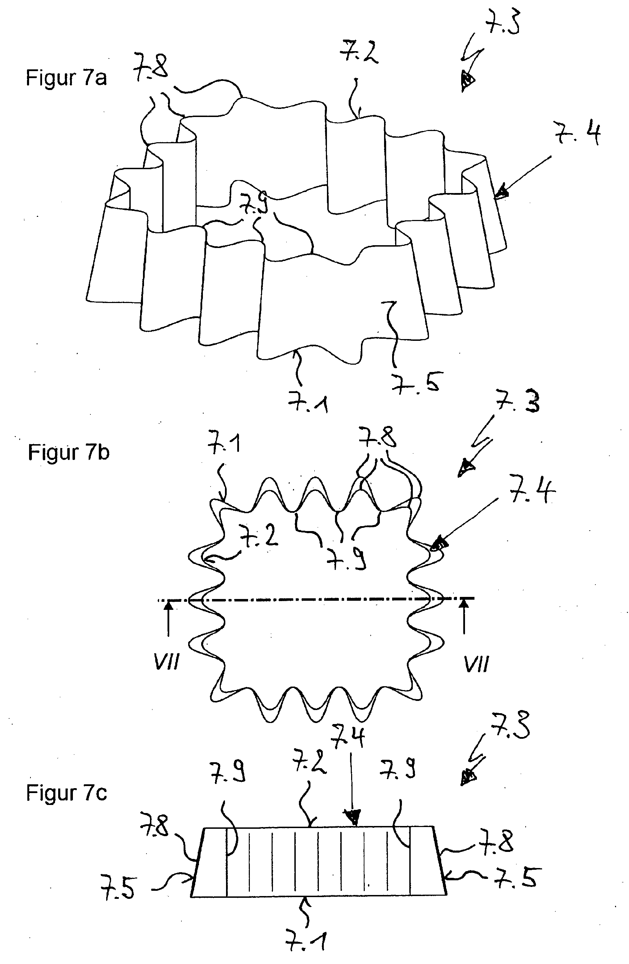

Gegenstand der Figuren 7a bis 7d ist ein Deformationselement 7.3, dessen Bruchkörper 7.4 im Wesentlichen dem unter den Figuren 2a bis 2b beschriebenen entspricht, mit dem Unterschied, dass sich der Bruchkörper 7.4 nicht linear erstreckt, sondern ringförmig geschlossen ist, indem die mantellinienparallelen Seiten des Bruchkörpers 7.4 kraftschlüssig miteinander verbunden sind. Der Bruchkörper 7.4 kann dabei in einem Grundriss die Form eines Ellipsoids oder Polygons aufweisen, insbesondere eines Kreises oder Rechtecks. Diese Ausgestaltung erlaubt es, das Deformationselement 7.3 um einen zu schützenden Gegenstand herum anzuordnen, beispielsweise um einen Behälter 7.31.

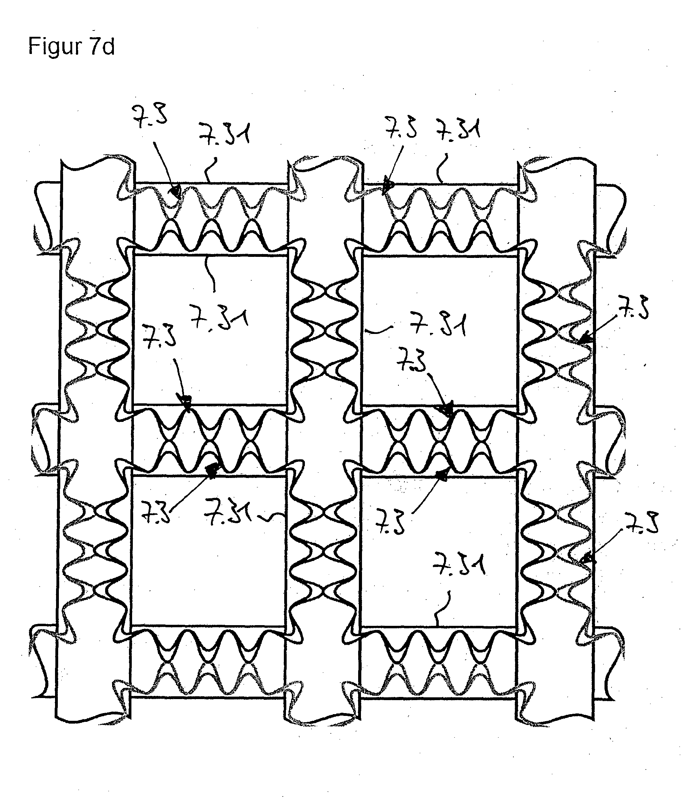

Wie aus Figur 7d hervorgeht können zur Bildung einer Deformationseinheit eine Vielzahl derartiger Deformationskörper 7.3 flächig nebeneinander angeordnet sein, wobei sich gegenüberliegende Ausbuchtungen 7.8, 7.9 zweier Deformationselemente 7.3 eine entgegengesetzte Orientierung aufweisen können oder mit gleicher Orientierung ineinander greifen.

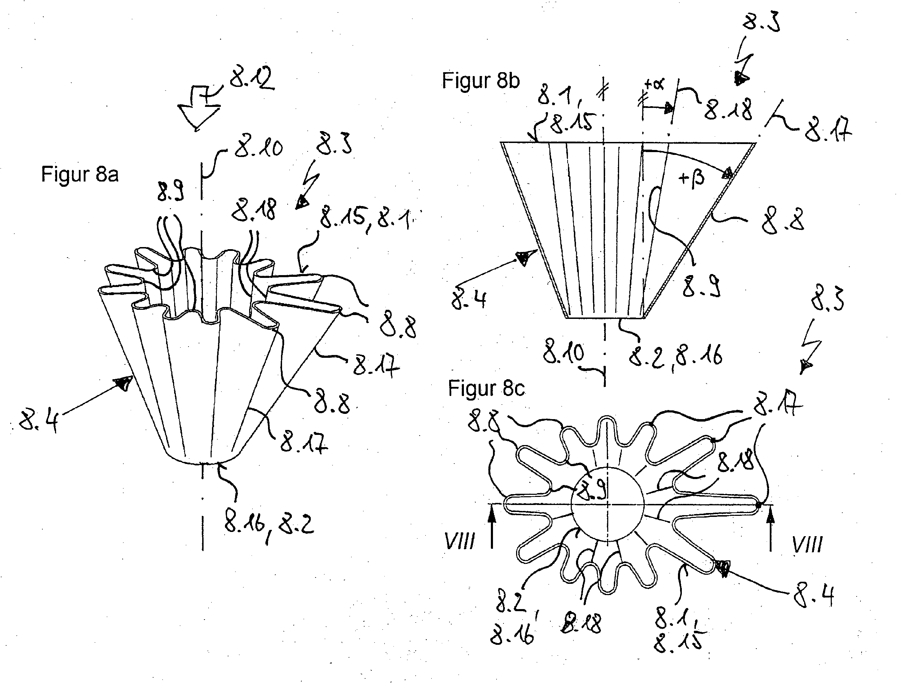

Die Figuren 8a bis 8c zeigen eine achte Ausführungsform eines erfindungsgemäßen Deformationselements 8.3, dessen Längsachse mit dem Bezugszeichen 8.10 gekennzeichnet ist. Die durch einen Aufprall bedingte Krafteinwirkung auf das Deformationselement 8.3 kann parallel zur Längsachse 8.10 oder im Falle eines off-axis Crashs in einem Winkel dazu verlaufen. Das Deformationselement 8.3 wird im Wesentlichen von einem hohlen Bruchkörper 8.4 gebildet, mit einer ausgeprägten Längserstreckungsrichtung parallel zur Längsachse 8.10 und mit einem ersten Ende 8.15 und einem axial gegenüberliegenden zweiten Ende 8.16. Der das erste Ende 8.15 bildende erste Rand des Bruchkörpers 8.4 trägt das Bezugszeichen 8.1, der das zweite Ende 8.16 bildende zweite Rand das Bezugszeichen 8.2. Bei der gezeigten Ausführungsform liegen die beiden Ränder 8.1, 8.2 in planparallelen, axial beabstandeten Ebenen, die jeweils senkrecht zur Längsachse 8.10 ausgerichtet sind.

Der zweite Rand 8.2 besitzt gegenüber dem ersten Rand 8.1 einen kleineren Umfang und zeigt im vorliegenden Ausführungsbeispiel Kreisform, kann aber ebenso eine elliptische Form oder die Form eines Vielecks oder dergleichen annehmen. Am ersten Ende 8.15 kann das Deformationselement 8.3 stirnseitig eine Öffnung aufweisen, so dass der zweite Rand 8.2 die Öffnung umgreift. Bei geschlossener Stirnseite des Bruchkörpers 8.4 bildet der zweite Rand 8.2 eine umlaufende Kante.

Der erste Rand 8.1 hingegen ist gekennzeichnet durch einen stetigen wellenartigen Verlauf, also ohne Knicke oder Sprünge, mit im Wechsel gebildeten, sich radial zur Längsachse 8.10 erstreckenden, nahtlos ineinander übergehenden ersten, radial nach außen weisenden Ausbuchtungen 8.8 und zweiten, radial nach innen weisenden Ausbuchtungen 8.9. Die relative Lage des zweiten Randes 8.2 zum ersten Rand 8.1 ist im vorliegenden Ausführungsbeispiel derart, dass der erste Rand 8.1 über seinen gesamten Verlauf, also mit allen Ausbuchtungen 8.8 und 8.9, außerhalb der axialen Projektion des zweiten Randes 8.2 liegt (s. Fig. 8c).

Die den ersten Rand 8.1 und zweiten Rand 8.2 verbindenden Mantellinien ergeben zusammen die Mantelfläche 8.5 des Bruchkörpers 8.4, wobei in den Fig. 8a bis 8c die die Scheitel der ersten Ausbuchtungen 8.8 bildenden Mantellinien mit dem Bezugszeichen 8.17 und die die Scheitel der zweiten Ausbuchtungen 8.9 bildenden Mantellinien mit dem Bezugszeichen 8.18 gekennzeichnet sind. Aus Figur 8b geht dabei hervor, dass der Winkel α zwischen den Mantellinien 8.18 und der Längsachse 8.10 im vorliegenden Ausführungsbeispiel +5° beträgt, ansonsten aber auch in einem Bereich von -20° bis +20°, vorzugsweise von -5° bis +10°, liegen kann. Der von der Mantellinie 8.17 und Längsachse 8.10 eingeschlossene Winkel β beträgt bei dem in Figur 8b dargestellten Deformationselement 8.3 +35°, kann gemäß der Erfindung aber auch bis zu +45° betragen.

Die radiale Erstreckung der durch Umschlagen um den zweiten Rand 8.2 gebildeten Ausbuchtungen 8.8 und 8.9 nimmt mit wachsendem axialem Abstand vom zweiten Ende 8.16 zu. Dieser erwünschte Effekt führt dazu, dass der Umfang des Bruchkörpers 8.4 in Schnittebenen senkrecht zur Längsachse 8.10 mit zunehmendem axialen Abstand vom zweiten Ende 8.16 ebenfalls zunimmt und damit die zur Lastabtragung zur Verfügung stehende Querschnittsfläche und damit die maximal in einer Schnittebene aufnehmbare Kraft größer wird. Der Verformungswiderstand ist somit über die axiale Länge des Deformationselements 8.3 nicht konstant, sondern steigt vom zweiten Ende 8.16 bzw. zweiten Rand 8.2 in Richtung des ersten Endes 8.15 bzw. ersten Randes 8.1 an.

Die ersten Ausbuchtungen 8.8 und zweiten Ausbuchtungen 8.9 können symmetrisch zu beiden Hauptachsen des Bruchkörperquerschnitts angeordnet sein, was auch nicht dargestellte Ausführungsformen mit einschließt, bei denen die radiale Erstreckung der ersten Ausbuchtungen 8.8 und zweiten Ausbuchtungen 8.9 in Richtung einer Hauptachse größer ist als in Richtung der anderen Hauptachse.

Die Figuren 8a bis 8c zeigen demgegenüber eine Ausführungsform, bei der eine Symmetrie lediglich um eine Hauptachse besteht, da die radiale Erstreckung der sich diametral zur Längsachse 8.10 gegenüberliegenden ersten Ausbuchtungen 8.8 und zweiten Ausbuchtungen 8.9 teilweise unterschiedlich ist. Eine derartige Ausbildung dient der gezielten Stabilisierung des Deformationselements 8.3 im Falle eines off-axis Crashs, um einem plötzlichen Stabilitätsversagen des Deformationselements 8.3 vorzubeugen.

Das zur Bildung eines erfindungsgemäßen Deformationskörpers 8.3 bevorzugte Ausgangsmaterial besteht - wie auch bei den anderen Ausführungsformen der Erfindung - aus einem Faserverbundwerkstoff, dessen Polymermatrix von Duroplasten, Thermoplasten oder Elastomeren gebildet sein kann. Die darin eingebetteten Fasern bestehen vorzugsweise aus Glasfasern, Karbonfasern, Aramidfasern, Naturfasern, Mineralfasern, Basaltfasern, Stahlfasern und dergleichen. Die Fasern können als Filamente oder Rovings in einer oder mehreren Lagen mit unidirektionaler Ausrichtung oder von Lage zu Lage abweichender Ausrichtung angeordnet oder als Stapelfasern in die Matrix eingebettet sein.

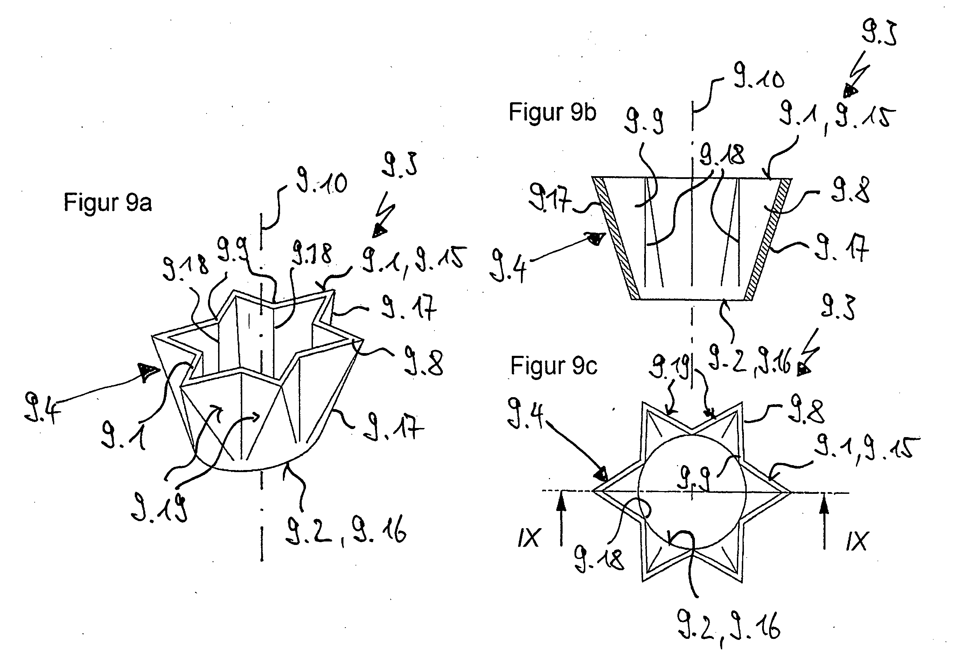

Eine neunte Ausführungsform der Erfindung ist in den Figuren 9a bis 9c dargestellt. Diese Ausführungsform entspricht weitgehend der achten Ausführungsform, so dass zur Vermeidung von Wiederholungen auf das dort Gesagte verwiesen wird. Ein erster Unterschied zur achten Ausführungsform besteht darin, dass die ersten Ausbuchtungen 9.8 und zweiten Ausbuchtungen 9.9 von ebenen Teilflächen 9.19 gebildet sind, die in den Scheiteln 9.20 spitz zusammenlaufen und dort spitze Kanten ausbilden. Ferner reichen die Scheitel 9.20 der zweiten Ausbuchtungen 9.9 bis an die axiale Projektion des zweiten Randes 9.2 am zweiten Ende 9.16, den sie tangieren. Der auf diese Weise entstehende sternförmige Verlauf des ersten Randes 9.1 verleiht dem Deformationselement 9.3 eine erhöhte Steifigkeit.

Ein weiterer Unterschied gegenüber der achten Ausführungsform zeigt sich in der Punktsymmetrie des Bruchkörpermantels zur Längsachse 9.10 bzw. doppelten Achsensymmetrie zu den beiden Hauptachsen. Das Deformationselement 9.3 gemäß den Figuren 9a bis 9c ist somit unabhängig von einer bestimmten Krafteinwirkungsrichtung zur Umwandlung kinetischer Energie geeignet.

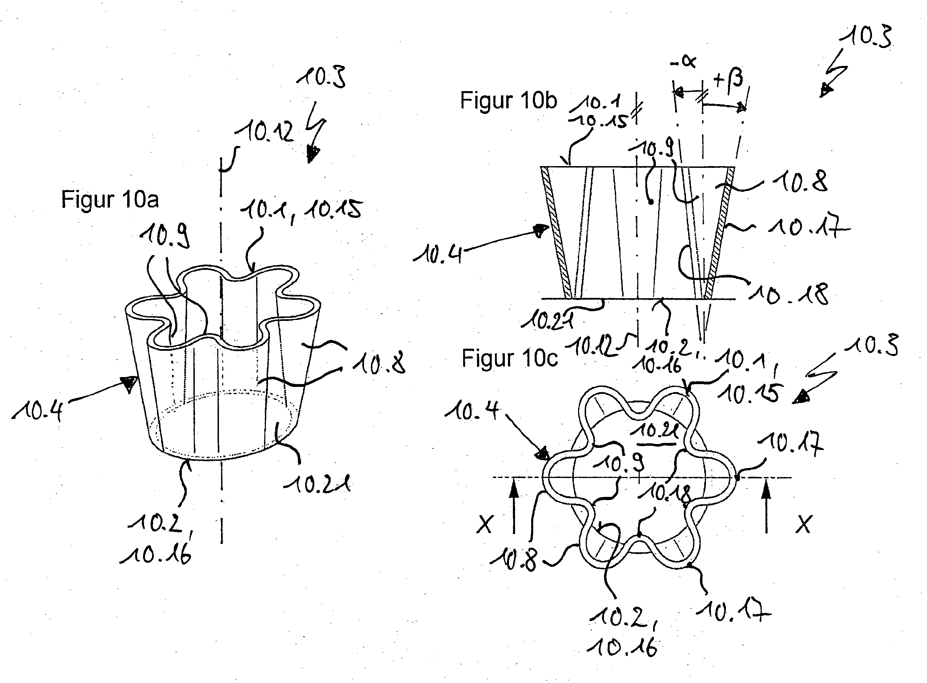

Die Figuren 10a bis 10c haben eine weitere zehnte Ausführungsform eines erfindungsgemäßen Deformationselements 10.3 zum Gegenstand, das in weiten Teilen den beiden vorgenannten Ausführungsformen entspricht und daher auf das dort Gesagte Bezug genommen wird.

Wie schon bei der neunten Ausführungsform beschrieben sind auch bei der zehnten Ausführungsform die ersten Ausbuchtungen 10.8 und zweite Ausbuchtungen 10.9 punktsymmetrisch zur Längsachse 10.10 angeordnet. Vor allem die Figuren 10b und 10c zeigen jedoch, dass im Unterschied zu den vorbeschriebenen Ausführungsformen die zweiten Ausbuchtungen 10.9 mit ihrem Scheitel 10.20 radial nach innen über die axiale Projektion des zweiten Randes 10.2 am zweiten Ende 10.16 des Bruchkörpers 10.4 hineinreichen. Die den Scheitel der zweiten Ausbuchtungen 10.9 bildenden Mantellinien 10.18 sind also mit einem negativen Winkel α zur Längsachse 10.10 hin geneigt, während die den Scheitel der ersten Ausbuchtungen 10.8 bildenden Mantellinien 10.17 mit positivem Winkel β der Längsachse 10.10 abgewandt sind (s. Figur 10b).

Als weiteres unterscheidendes Merkmal sieht man in den Figuren 10a bis 10c, dass das Deformationselement 10.3 im Bereich der Stirnseite am zweiten Ende 10.16 offen ist, der zweite Rand 10.2 also eine Öffnung 10.21 umschließt.

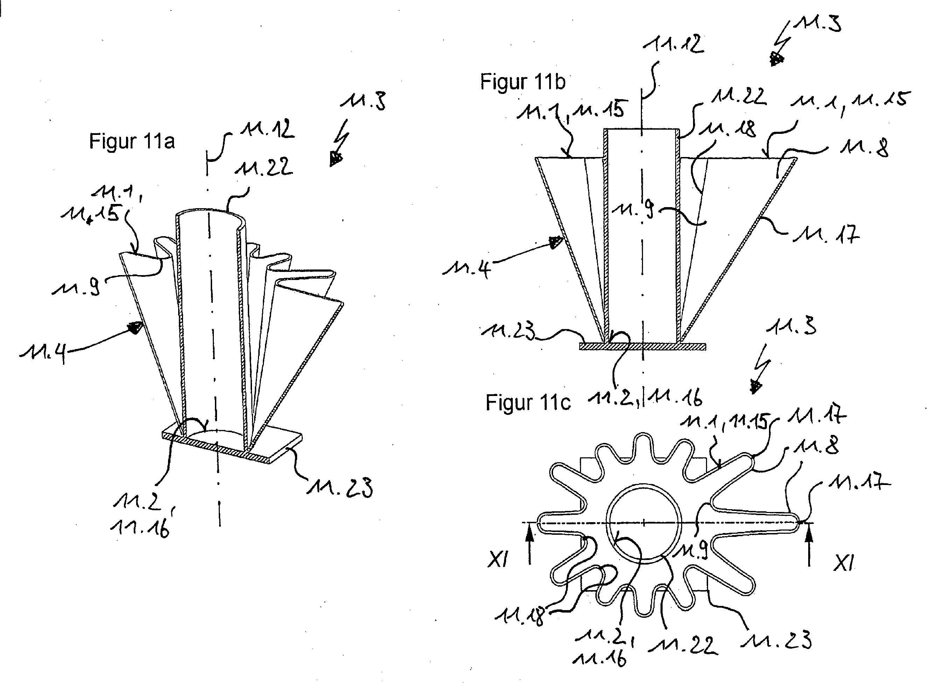

Die Figuren 11a bis 11c betreffen eine Weiterentwicklung der unter den Figuren 8a bis 8c beschriebenen achten Ausführungsform der Erfindung. Der Bruchkörper 11.4 entspricht daher dem der ersten Ausführungsform, so dass zur Vermeidung von Wiederholungen die dortigen Ausführungen entsprechend gelten.

Zusätzlich weist das weiterentwickelte Deformationselement 11.3 einen hohlzylindrischen Deformationskörper 11.22 auf, der koaxial zur Längsachse 11.10 innerhalb des Bruchkörpers 11.4 angeordnet ist. Der Deformationskörper 11.22 besteht vorteilhafterweise ebenfalls aus einem Faserkunststoffverbund und besitzt im vorliegenden Fall Kreisquerschnitt, könnte stattdessen aber auch andere Querschnittsformen wie zum Beispiel einen Rechteckquerschnitt aufweisen und/oder sich über die axiale Länge zum ersten Ende 11.15 des Deformationselements 11.3 hin aufweiten. Die gegenseitige Fixierung von Bruchkörper 11.4 und Deformationskörper 11.22 erfolgt über eine gemeinsame Prallplatte 11.23 am ersten Ende des Deformationselements 11.3.

Durch Triggerung im Bereich des ersten Endes 11.15 des Deformationskörpers 11.22 wird erreicht, dass sich im Falle eines Crashs zwei Crashfronten unabhängig voneinander entwickeln. Die erste Crashfront entsteht im Bereich des zweiten Endes 11.16 des Bruchkörpers 11.4 nach Überschreiten der dort maximal aufnehmbaren Kraft und schreitet sukzessive in Richtung des ersten Endes 11.15 fort. Die zweite Crashfront bildet sich aufgrund der Triggerung am ersten Ende 11.15 des Deformationskörpers 11.22, von wo sie in Richtung des zweiten Endes 11.16 des Deformationselements 11.3 wandert. Die von entgegengesetzten Enden ausgehenden Crashfronten stellen sicher, dass die Strukturintegrität des Deformationselements 11.3 möglichst lange erhalten bleibt.

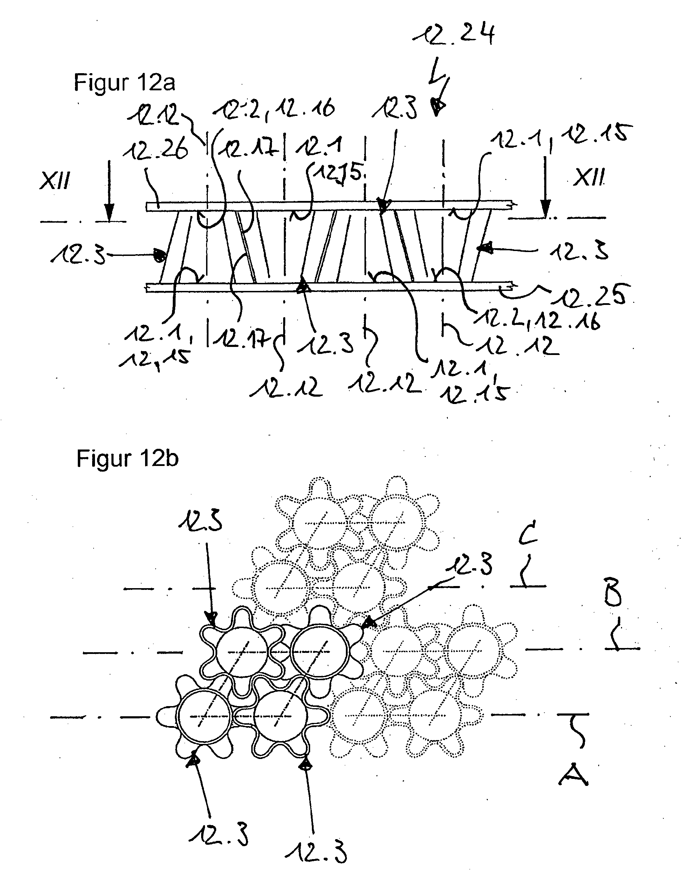

Die Figuren 12a und 12b zeigen den Zusammenschluss einer Vielzahl erfindungsgemäßer Deformationselemente 12.3 zur Bildung einer ersten plattenförmigen Einheit 12.24 mit energieabsorbierenden Eigenschaften. Die Einheit 12.24 besitzt eine Grundplatte 12.25 und eine im Abstand planparallel dazu angeordnete Deckplatte 12.26. In dem Raum zwischen Grundplatte 12.25 und Deckplatte 12.26 sind die erfindungsgemäßen Deformationselemente 12.3 angeordnet, wobei ihre Längsachsen 12.10 senkrecht zur Ebene der Platten 12.25, 12.26 ausgerichtet sind.

Um eine möglichst hohe Packungsdichte der Deformationselemente 12.3 zu erreichen, weist jedes Deformationselement 12.3 sechs erste Ausbuchtungen 12.8 bzw. zweite Ausbuchtungen 12.9 auf. Durch entgegengesetzte Orientierung zweier benachbarter Deformationselemente 12.3 wird erreicht, dass die sich radial gegenüberliegenden ersten Ausbuchtungen 12.8 zweier benachbarter Deformationselemente 12.3 einen komplementären Verlauf aufweisen, also die den Scheitel der sich gegenüberliegenden ersten Ausbuchtungen 12.8 bildenden Mantellinien 12.17 sich berühren oder in engem Abstand parallel zueinander verlaufen. Unter entgegengesetzter Orientierung wird dabei verstanden, dass bei einem ersten Deformationselement 12.3 dessen erstes Ende 12.15 der Grundplatte 12.25 zugeordnet ist und bei einem dazu benachbarten Deformationselement 12.3 dessen erstes Ende 12.15 dagegen der Deckplatte 12.26.

Derartig zueinander angeordnete Deformationselemente 12.3 bilden eine Anzahl Reihen A, B, C, wobei die Deformationselemente 12.3 zweier benachbarter Reihen A, B einen seitlichen Versatz aufweisen, der dem halben seitlichen Abstand zweier Deformationselemente 12.3 einer Reihe A, B, C entspricht. Im Ergebnis entsteht auf diese Weise eine rautenförmige Anordnung der Deformationselemente 12.3, wobei die sich in den Hauptachsen gegenüberliegenden Deformationselemente 12.3 die gleiche Ausrichtung aufweisen und die sich in den Rautenseiten gegenüberliegenden Deformationselemente 12.3 eine entgegengesetzte Ausrichtung. Diese Anordnung ermöglicht eine sehr hohe Dichte der Deformationselemente 12.3 innerhalb einer erfindungsgemäßen Einheit 12.24 mit dem Vorteil einer hohen spezifischen Energieaufnahme.

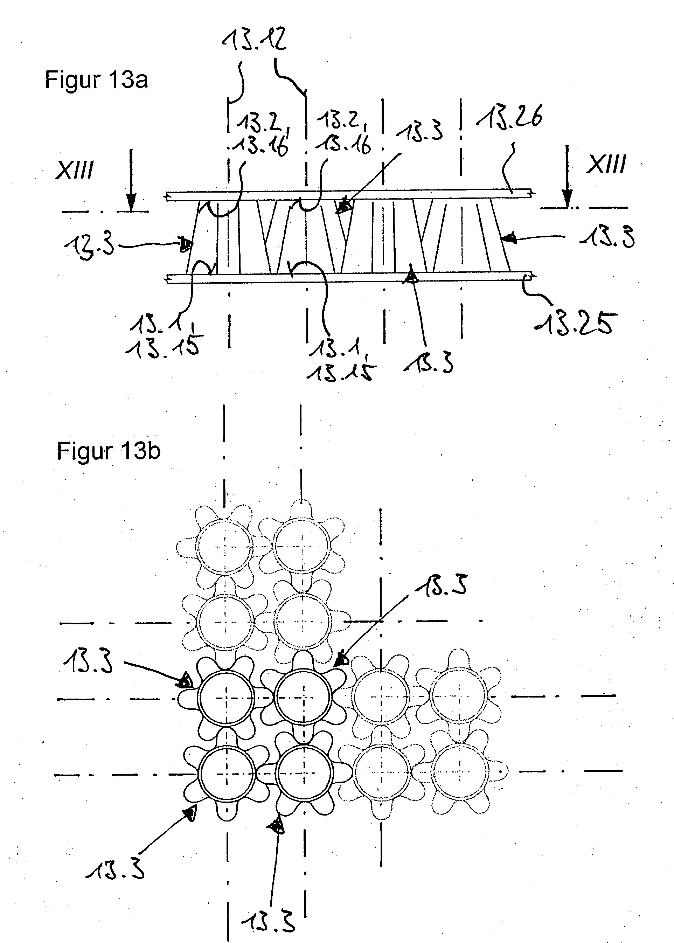

Bei der in den Fig. 13a und 13b dargestellten zweiten plattenförmigen Einheit 13.24 besitzen alle Deformationselemente 13.3 die gleiche Orientierung. Es sind also alle Deformationselemente 13.3 mit ihrem ersten Ende 13.15 an der Grundplatte 13.25 befestigt und mit ihrem zweiten Ende 13.16 an der Deckplatte 13.26. Die gegenseitige relative Lage der Deformationselemente 13.3 untereinander ist dabei derart, dass alle Deformationselemente 13.3 schachbrettartig ohne Versatz in Reihen und Spalten angeordnet sind. Ansonsten gleicht diese Ausführungsform der Erfindung der unter den Fig. 12a bis 12c beschriebenen.

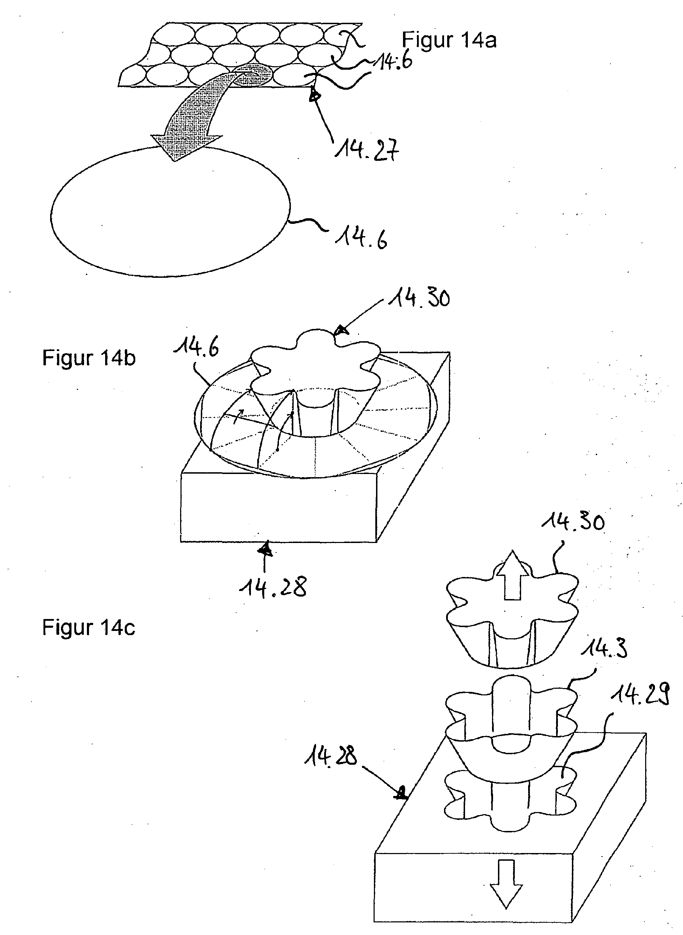

Anhand der Figuren 14a bis 14c wird schließlich das Verfahren zur Herstellung eines erfindungsgemäßen Deformationselements 1 erläutert, das in diesem Fall aus einem faserverstärkten Thermoplast besteht. Das nachfolgend beschriebene Verfahren ist jedoch in analoger Anwendung auch auf andere Ausgangsmaterialien wie zum Beispiel Duroplaste oder Elastomere übertragbar.

Zunächst wird ein flächiger Materialzuschnitt 14.6 bereitgestellt. Dieser kann wie in Figur 14a dargestellt, aus einer Platte 14.27 oder Bahn gewonnen werden, beispielsweise durch Stanzen, Schneiden und dergleichen. Im vorliegenden Ausführungsbeispiel besitzt der Zuschnitt 14.6 Kreisform, ohne jedoch darauf eingeschränkt zu sein. Der äußere Rand des Zuschnitts 14.6 entspricht dem späteren ersten Rand 14.1 des Deformationselements 14.3 und trägt daher dasselbe Bezugszeichen.

In einem weiteren Schritt wird der Zuschnitt 14.6 mit Wärme beaufschlagt, wodurch die thermoplastische Matrix verformbar wird. In diesem Zustand wird der Zuschnitt 14.6 auf eine matrizenartige Unterform 14.28 gelegt, die eine der späteren Form des Deformationselements 14.3 entsprechende Aushöhlung 14.29 aufweist. Von der anderen Seite wird ein Kern 14.30 auf den Zuschnitt 14.6 abgesenkt, dessen Außenfläche der Innenfläche des herzustellenden Deformationselements 14.3 entspricht. Die dem Zuschnitt 14.6 zugewandte Unterseite des Kerns 14.30 definiert dabei einen innerhalb des ersten Randes 14.1 des Zuschnitts 14.6 liegenden umlaufenden Rand beziehungsweise Kante, der dem zweiten Rand 14.2 des fertigen Deformationselement 14.3 entspricht.

Die zwischen dem ersten Rand 14.1 und zweiten Rand 14.2 liegenden Bereiche des Zuschnitts 14.6 werden anschließend im Zuge des Absenkens des Kerns 14.30 in die Unterform 14.28 um den zweiten Rand 14.2 umgeschlagen und in der von Unterform 14.28 und Kern 14.30 gebildeten Kavität zu einem einen Bruchkörper 14.4 bildenden Mantel mit ersten Ausbuchtungen 14.8 und zweiten Ausbuchtungen 14.9 geformt.

Nach Erkalten und damit Erstarren des Deformationselements 14.3 werden Kern 14.30 und Unterform 14.28 auseinandergefahren und das fertige Deformationselement 14.3 aus der Unterform 14.28 entnommen.

Das beschriebene Verfahren kann sinngemäß auch zur Herstellung von Deformationselementen bzw. Bruchkörpern gemäß der Figuren 1a bis 7d angewandt werden, wobei der bogenförmige Zuschnitt in die sich linear erstreckende, wellenförmige Ausbuchtungen aufweisende Kavität zwischen einer Unterform und Oberform gelegt und verfestigt wird.

Es versteht sich, dass die Erfindung nicht auf die konkreten Merkmalskombinationen der einzelnen Ausführungsformen beschränkt ist. Vielmehr liegen auch Ausführungsformen im Rahmen der Erfindung, bei denen einzelne Merkmale einer Ausführungsform mit den Merkmalen einer anderen Ausführungsform kombiniert sind.

## Patentansprüche

1. Deformationselement (1.3; 2.3; 3.3; 4.3; 5.3; 6.3; 7.3; 8.3; 9.3; 10.3; 11.3; 12.3; 13.3; 14.3) zur Absorption kinetischer Energie, insbesondere der bei einem Crash zweier Kollisionspartner freiwerdenden kinetischen Energie, mit mindestens einem Bruchkörper (1.4; 2.4; 3.4; 4.4; 5.4; 6.4; 7.4; 8.4; 10.4; 11.4; 14.4) aus einem Faserkunststoffverbund, der einen ersten Rand (1.1; 2.1; 4.1; 6.1; 8.1; 9.1; 14.1) und einen im seitlichen Abstand vom ersten Rand (1.1; 2.1; 4.1; 6.1; 8.1; 9.1; 14.1) verlaufenden zweiten Rand (1.2; 2.2; 4.2; 5.2; 6.2; 8.2; 9.2; 10.2; 14.2) aufweist, wobei zumindest der erste Rand (1.1; 2.1; 4.1; 6.1; 8.1; 9.1; 14.1) einen Verlauf mit ersten Ausbuchtungen (1.8; 2.8; 3.8; 6.8; 7.8; 8.8; 9.8; 10.8; 12.8; 14.8) und entgegengesetzt weisenden zweiten Ausbuchtungen (1.9; 2.9; 3.9; 6.9; 7.9; 8.9; 9.9; 10.9; 12.9; 14.9) aufweist, die wechselweise ineinander übergehen, **dadurch gekennzeichnet, dass** der erste Rand (1.1; 2.1; 4.1; 6.1; 8.1; 9.1; 14.1) eine größere Länge aufweist als der zweite Rand (1.2; 2.2; 4.2; 5.2; 6.2; 8.2; 9.2; 10.2; 14.2) und dass der erste Rand (1.1; 2.1; 4.1; 6.1; 8.1; 9.1; 14.1) und der zweite Rand (1.2; 2.2; 4.2; 5.2; 6.2; 8.2; 9.2; 10.2; 14.2) über eine Mantelfläche (1.5; 8.5) miteinander verbunden sind, die von den ersten Rand (1.1; 2.1; 4.1; 6.1; 8.1; 9.1; 14.1) und zweiten Rand (1.2; 2.2; 4.2; 5.2; 6.2; 8.2; 9.2; 10.2; 14.2) verbindenden Mantellinien (8.17; 8.18; 10.17; 10.18; 12.17) gebildet ist.

2. Deformationselement (1.3; 2.3; 3.3; 4.3; 5.3; 6.3; 7.3; 8.3; 9.3; 10.3; 11.3; 12.3; 13.3; 14.3) nach Anspruch 1, **dadurch gekennzeichnet, dass** mindestens der erste Rand (1.1; 2.1; 4.1; 6.1; 8.1; 9.1; 14.1) einen knickfreien wellenförmigen Verlauf aufweist.

3. Deformationselement (1.3; 2.3; 3.3; 4.3; 5.3; 6.3; 7.3; 8.3; 9.3; 10.3; 11.3; 12.3; 13.3; 14.3) nach Anspruch 1, **dadurch gekennzeichnet, dass** mindestens der erste Rand (1.1; 2.1; 4.1; 6.1; 8.1; 9.1; 14.1) im Bereich der Scheitel (9.20; 10.20) der ersten Ausbuchtungen (1.8; 2.8; 3.8; 6.8; 7.8; 8.8; 9.8; 10.8; 12.8; 14.8) und/oder zweiten Ausbuchtungen (1.9; 2.9; 3.9; 6.9; 7.9; 8.9; 9.9; 10.9; 12.9; 14.9) jeweils einen Knick aufweist.

4. Deformationselement (1.3; 2.3; 3.3; 4.3; 5.3; 6.3; 7.3; 8.3; 9.3; 10.3; 11.3; 12.3; 13.3; 14.3) nach einem der Anspruch 1 bis 3, **dadurch gekennzeichnet, dass** der zweite Rand (1.2; 2.2; 4.2; 5.2; 6.2; 8.2; 9.2; 10.2; 14.2) einen Verlauf ohne Ausbuchtungen aufweist, vorzugsweise einen linear verläuft oder Ellipsenform oder Polygonform besitzt, insbesondere Kreisform oder Rechteckform.

5. Deformationselement (1.3; 2.3; 3.3; 4.3; 5.3; 6.3; 7.3; 8.3; 9.3; 10.3; 11.3; 12.3; 13.3; 14.3) nach einem der Ansprüche 1 bis 4, **dadurch gekennzeichnet, dass** der Bruchkörper (1.4; 2.4; 3.4; 4.4; 5.4; 6.4; 7.4; 8.4; 10.4; 11.4; 14.4) einen Gurt (5.13; 5.14) oder eine Prallplatte (11.23) aufweist, der oder die mit dem ersten Rand (1.1; 2.1; 4.1; 6.1; 8.1; 9.1; 14.1) und/oder zweiten Rand (1.2; 2.2; 4.2; 5.2; 6.2; 8.2; 9.2; 10.2; 14.2) kraftschlüssig verbunden ist, insbesondere durch Stoffschluss oder Formschluss.

6. Deformationselement (1.3; 2.3; 3.3; 4.3; 5.3; 6.3; 7.3; 8.3; 9.3; 10.3; 11.3; 12.3; 13.3; 14.3) nach einem der Ansprüche 1 bis 5, **dadurch gekennzeichnet, dass** mindestens zwei Bruchkörper (1.4; 2.4; 3.4; 4.4; 5.4; 6.4; 7.4; 8.4; 10.4; 11.4; 14.4) parallel nebeneinander angeordnet sind, und die ersten Ausbuchtungen (1.8; 2.8; 3.8; 6.8; 7.8; 8.8; 9.8; 10.8; 12.8; 14.8) und zweiten Ausbuchtungen (1.9; 2.9; 3.9; 6.9; 7.9; 8.9; 9.9; 10.9; 12.9; 14.9) des ersten Bruchkörpers (1.4; 2.4; 3.4; 4.4; 5.4; 6.4; 7.4; 8.4; 10.4; 11.4; 14.4) synchron mit den ersten Ausbuchtungen (1.8; 2.8; 3.8; 6.8; 7.8; 8.8; 9.8; 10.8; 12.8; 14.8) und zweiten Ausbuchtungen (1.9; 2.9; 3.9; 6.9; 7.9; 8.9; 9.9; 10.9; 12.9; 14.9) des mindestens zweiten Bruchkörpers (1.4; 2.4; 3.4; 4.4; 5.4; 6.4; 7.4; 8.4; 10.4; 11.4; 14.4) verlaufen.

7. Deformationselement (1.3; 2.3; 3.3; 4.3; 5.3; 6.3; 7.3; 8.3; 9.3; 10.3; 11.3; 12.3; 13.3; 14.3) nach einem der Ansprüche 1 bis 5, **dadurch gekennzeichnet, dass** mindestens zwei Bruchkörper (1.4; 2.4; 3.4; 4.4; 5.4; 6.4; 7.4; 8.4; 10.4; 11.4; 14.4) parallel nebeneinander angeordnet sind, und die ersten Ausbuchtungen (1.8; 2.8; 3.8; 6.8; 7.8; 8.8; 9.8; 10.8; 12.8; 14.8) und zweiten Ausbuchtungen (1.9; 2.9; 3.9; 6.9; 7.9; 8.9; 9.9; 10.9; 12.9; 14.9) des ersten Bruchkörpers (1.4; 2.4; 3.4; 4.4; 5.4; 6.4; 7.4; 8.4; 10.4; 11.4; 14.4) asynchron entgegengesetzt zu den ersten Ausbuchtungen (1.8; 2.8; 3.8; 6.8; 7.8; 8.8; 9.8; 10.8; 12.8; 14.8) und zweiten Ausbuchtungen (1.9; 2.9; 3.9; 6.9; 7.9; 8.9; 9.9; 10.9; 12.9; 14.9) des mindestens zweiten Bruchkörpers (1.4; 2.4; 3.4; 4.4; 5.4; 6.4; 7.4; 8.4; 10.4; 11.4; 14.4) verlaufen.

8. Deformationselement (1.3; 2.3; 3.3; 4.3; 5.3; 6.3; 7.3; 8.3; 9.3; 10.3; 11.3; 12.3; 13.3; 14.3) nach einem der Ansprüche 1 bis 7, **dadurch gekennzeichnet, dass** sowohl der erste Rand (1.1; 2.1; 4.1; 6.1; 8.1; 9.1; 14.1) als auch der zweite Rand (1.2; 2.2; 4.2; 5.2; 6.2; 8.2; 9.2; 10.2; 14.2) einen Verlauf mit wechselweise ineinander übergehenden ersten Ausbuchtungen (1.8; 2.8; 3.8; 6.8; 7.8; 8.8; 9.8; 10.8; 12.8; 14.8) und zweiten Ausbuchtungen (1.9; 2.9; 3.9; 6.9; 7.9; 8.9; 9.9; 10.9; 12.9; 14.9) aufweist.

9. Deformationselement (1.3; 2.3; 3.3; 4.3; 5.3; 6.3; 7.3; 8.3; 9.3; 10.3; 11.3; 12.3; 13.3; 14.3) nach einem der Ansprüche 1 bis 8, **dadurch gekennzeichnet, dass** sich die Mantelfläche (1.5; 8.5) des Bruchkörpers (1.4; 2.4; 3.4; 4.4; 5.4; 6.4; 7.4; 8.4; 10.4; 11.4; 14.4) entlang einer Geraden entwickelt, die senkrecht zu den Mantellinien (8.17; 8.18; 10.17; 10.18; 12.17) der ersten und zweiten Ausbuchtungen (1.8; 2.8; 3.8; 6.8; 7.8; 8.8; 9.8; 10.8; 12.8; 14.8)(1.9; 2.9; 3.9; 6.9; 7.9; 8.9; 9.9; 10.9; 12.9; 14.9) steht, so dass das Deformationselement (1.3; 2.3; 3.3; 4.3; 5.3; 6.3; 7.3; 8.3; 9.3; 10.3; 11.3; 12.3; 13.3; 14.3) eine lineare Haupterstreckungsrichtung besitzt.

10. Deformationselement (1.3; 2.3; 3.3; 4.3; 5.3; 6.3; 7.3; 8.3; 9.3; 10.3; 11.3; 12.3; 13.3; 14.3) nach einem der Ansprüche 1 bis 8, **dadurch gekennzeichnet, dass** sich die Mantelfläche (1.5; 8.5) des Bruchkörpers (1.4; 2.4; 3.4; 4.4; 5.4; 6.4; 7.4; 8.4; 10.4; 11.4; 14.4) entlang einer Spirale entwickelt, wodurch das Deformationselement (1.3; 2.3; 3.3; 4.3; 5.3; 6.3; 7.3; 8.3; 9.3; 10.3; 11.3; 12.3; 13.3; 14.3) einen aus Umläufen gebildeten Bruchkörper (1.4; 2.4; 3.4; 4.4; 5.4; 6.4; 7.4; 8.4; 10.4; 11.4; 14.4) besitzt.

11. Deformationselement (1.3; 2.3; 3.3; 4.3; 5.3; 6.3; 7.3; 8.3; 9.3; 10.3; 11.3; 12.3; 13.3; 14.3) nach einem der Ansprüche 1 bis 8, **dadurch gekennzeichnet, dass** sich die Mantelfläche (1.5; 8.5) des Bruchkörpers (1.4; 2.4; 3.4; 4.4; 5.4; 6.4; 7.4; 8.4; 10.4; 11.4; 14.4) entlang eine Polygons oder Ellipsoids entwickelt, wodurch das Deformationselement (1.3; 2.3; 3.3; 4.3; 5.3; 6.3; 7.3; 8.3; 9.3; 10.3; 11.3; 12.3; 13.3; 14.3) einen zylindrischen oder konischen Bruchkörpers (1.4; 2.4; 3.4; 4.4; 5.4; 6.4; 7.4; 8.4; 10.4; 11.4; 14.4) besitzt.

12. Deformationselement (1.3; 2.3; 3.3; 4.3; 5.3; 6.3; 7.3; 8.3; 9.3; 10.3; 11.3; 12.3; 13.3; 14.3) nach einem der Ansprüche 1 bis 11, **dadurch gekennzeichnet, dass** der Bruchkörper (1.4; 2.4; 3.4; 4.4; 5.4; 6.4; 7.4; 8.4; 10.4; 11.4; 14.4) aus einem planen Zuschnitt in Form eines bogenförmigen Streifens definierter Breite hergestellt ist, dessen sich gegenüberliegende gekrümmte Längsseiten im Zuge des Legens der ersten und zweiten Ausbuchtungen (1.8; 2.8; 3.8; 6.8; 7.8; 8.8; 9.8; 10.8; 12.8; 14.8)( 1.9; 2.9; 3.9; 6.9; 7.9; 8.9; 9.9; 10.9; 12.9; 14.9) senkrecht zur Ebene des Zuschnitts den ersten Rand (1.1; 2.1; 4.1; 6.1; 8.1; 9.1; 14.1) und zweiten Rand (1.2; 2.2; 4.2; 5.2; 6.2; 8.2; 9.2; 10.2; 14.2) bilden.

13. Deformationselement (1.3; 2.3; 3.3; 4.3; 5.3; 6.3; 7.3; 8.3; 9.3; 10.3; 11.3; 12.3; 13.3; 14.3) nach einem der Ansprüche 1 bis 7, **dadurch gekennzeichnet** der Bruchkörper (1.4; 2.4; 3.4; 4.4; 5.4; 6.4; 7.4; 8.4; 10.4; 11.4; 14.4) von einem in der Längsachse (6.10; 8.10; 9.10; 10.10; 11.10; 12.10) des Deformationselements (1.3; 2.3; 3.3; 4.3; 5.3; 6.3; 7.3; 8.3; 9.3; 10.3; 11.3; 12.3; 13.3; 14.3) verlaufenden Hohlkörper gebildet ist, der ein erstes Ende (8.15; 11.15; 12.15; 13.15) und dazu axial beabstandetes zweites Ende (8.16; 9.16; 10.16; 11.16; 13.16) aufweist, wobei der erste Rand (1.1; 2.1; 4.1; 6.1; 8.1; 9.1; 14.1) vom ersten Ende (8.15; 11.15; 12.15; 13.15) und der zweite Rand (1.2; 2.2; 4.2; 5.2; 6.2; 8.2; 9.2; 10.2; 14.2) vom zweiten Ende (8.16; 9.16; 10.16; 11.16; 13.16) gebildet ist.

14. Deformationselement (1.3; 2.3; 3.3; 4.3; 5.3; 6.3; 7.3; 8.3; 9.3; 10.3; 11.3; 12.3; 13.3; 14.3) nach einem Ansprüche 13, **dadurch gekennzeichnet, dass** die ersten Ausbuchtungen (1.8; 2.8; 3.8; 6.8; 7.8; 8.8; 9.8; 10.8; 12.8; 14.8) und zweiten Ausbuchtungen (1.9; 2.9; 3.9; 6.9; 7.9; 8.9; 9.9; 10.9; 12.9; 14.9) radial außerhalb der axialen Projektion des zweiten Randes (1.2; 2.2; 4.2; 5.2; 6.2; 8.2; 9.2; 10.2; 14.2) verlaufen.

15. Deformationselement (1.3; 2.3; 3.3; 4.3; 5.3; 6.3; 7.3; 8.3; 9.3; 10.3; 11.3; 12.3; 13.3; 14.3) nach Anspruch 13 oder 14, **dadurch gekennzeichnet, dass** die ersten Ausbuchtungen (1.8; 2.8; 3.8; 6.8; 7.8; 8.8; 9.8; 10.8; 12.8; 14.8) radial außerhalb der axialen Projektion des ersten Randes (1.1; 2.1; 4.1; 6.1; 8.1; 9.1; 14.1) verlaufen und die zweiten Ausbuchtungen (1.9; 2.9; 3.9; 6.9; 7.9; 8.9; 9.9; 10.9; 12.9; 14.9) radial innerhalb oder auf der axialen Projektion des ersten Randes (1.1; 2.1; 4.1; 6.1; 8.1; 9.1; 14.1).

16. Deformationselement (1.3; 2.3; 3.3; 4.3; 5.3; 6.3; 7.3; 8.3; 9.3; 10.3; 11.3; 12.3; 13.3; 14.3) nach einem der Ansprüche 13 bis 15, **dadurch gekennzeichnet, dass** die den Scheitel (9.20; 10.20) der zweiten Ausbuchtungen (1.9; 2.9; 3.9; 6.9; 7.9; 8.9; 9.9; 10.9; 12.9; 14.9) bildenden Mantellinien (8.17; 8.18; 10.17; 10.18; 12.17) mit der Längsachse (6.10; 8.10; 9.10; 10.10; 11.10; 12.10) einen Winkel α bilden, wobei der Winkel α mindestens -20° und maximal +20° beträgt, vorzugsweise mindestens - 5° und maximal + 10°.

17. Deformationselement (1.3; 2.3; 3.3; 4.3; 5.3; 6.3; 7.3; 8.3; 9.3; 10.3; 11.3; 12.3; 13.3; 14.3) nach einem der Ansprüche 13 bis 16, **dadurch gekennzeichnet, dass** die den Scheitel (9.20; 10.20) der ersten Ausbuchtungen (1.8; 2.8; 3.8; 6.8; 7.8; 8.8; 9.8; 10.8; 12.8; 14.8) bildenden Mantellinien (8.17; 8.18; 10.17; 10.18; 12.17) mit der Längsachse (6.10; 8.10; 9.10; 10.10; 11.10; 12.10) einen Winkel β einschließen, wobei der Winkel β maximal + 45° beträgt, vorzugsweise maximal + 35°.

18. Deformationselement (1.3; 2.3; 3:3; 4.3; 5.3; 6.3; 7.3; 8.3; 9.3; 10.3; 11.3; 12.3; 13.3; 14.3) nach einem der Ansprüche 1 bis 17, **dadurch gekennzeichnet, dass** innerhalb des Bruchkörpers (1.4; 2.4; 3.4; 4.4; 5.4; 6.4; 7.4; 8.4; 10.4; 11.4; 14.4) in achsparalleler Lage ein höhlförmiger Deformationskörper (11.22) angeordnet ist, der vorzugsweise nach einem der Patentansprüche 1 bis 17 ausgebildet ist oder der von einem zylindrischen oder konischen Rohr gebildet ist.

19. Einheit (12.24; 13.24) zur Absorption kinetischer Energie, insbesondere der bei einem Crash zweier Kollisionspartner freiwerdenden kinetischen Energie, **gekennzeichnet durch** mehrere Deformationselemente (1.3; 2.3; 3.3; 4.3; 5.3; 6.3; 7.3; 8.3; 9.3; 10.3; 11.3; 12.3; 13.3; 14.3) gemäß einem der Ansprüche 1 bis 18, die zwischen einer gemeinsamen Grundplatte (12.25; 13.25) und einer gemeinsamen Deckplatte (12.26; 13.26) angeordnet sind.

20. Verfahren zur Herstellung eines Deformationselements gemäß einem der Ansprüche 1 bis 18, **gekennzeichnet durch** folgende Verfahrensschritte:
a) Bereitstellen eines flächigen planen Materialzuschnitts, der begrenzt ist **durch** einen ersten gekrümmten Rand, und einen im seitlichen Abstand zum ersten Rand verlaufenden zweiten gekrümmten Rand, wobei der erste Rand länger ist als der zweite Rand,
b) Auslenken des Materialzuschnitts senkrecht zu seiner Ebene mit wechselseitiger Orientierung zur Bildung erster Ausbuchtungen und zweiter Ausbuchtungen zumindest im Bereich des ersten Randes,
c) Verfestigung des Deformationselements.

21. Verfahren nach Anspruch 20, **dadurch gekennzeichnet, dass** der Materialzuschnitt von einem bogenförmigen Streifen gebildet ist und der Streifen im Zuge des Schrittes b) von der Bogenform in eine lineare Haupterstreckungsrichtung gebracht wird.

22. Verfahren nach Anspruch 20, **dadurch gekennzeichnet, dass** der Materialzuschnitt ellipsoidförmig, insbesondere kreisförmig ist, wobei der erste Rand den Außenumfang des Materialzuschnitts bildet und der zweite Rand innerhalb des ersten Randes liegt, vorzugsweise mit identischem Krümmungsmittelpunkt, und im Zuge des Schrittes b) die zwischen dem ersten Rand und zweiten Rand liegenden Bereiche des Materialzuschnitts um den zweiten Rand unter Bildung eines Hohlkörpers umgebogen und dabei ausgelenkt werden.

## Claims

1. A deformation element (1.3; 2.3; 3.3; 4.3; 5.3; 6.3; 7.3; 8.3; 9.3; 10.3; 11.3; 12.3; 13.3; 14.3) for absorption of kinetic energy, in particular the kinetic energy released in a crash of two collision partners, having at least one breakable body (1.4; 2.4; 3.4; 4.4; 5.4; 6.4; 7.4; 8.4; 10.4; 11.4; 14.4) made of a fiber-plastic composite having a first edge (1.1; 2.1; 4.1; 6.1; 8.1; 9.1; 14.1) and a second edge (1.2; 2.2; 4.2; 5.2; 6.2; 8.2; 9.2; 10.2; 14.2), which runs at a lateral distance from the first edge (1.1; 2.1; 4.1; 6.1; 8.1; 9.1; 14.1), wherein at least the first edge (1.1; 2.1; 4.1; 6.1; 8.1; 9.1; 14.1) has a profile having first bulges (1.8; 2.8; 3.8; 6.8; 7.8; 8.8; 9.8; 10.8; 12.8; 14.8) and second bulges (1.9; 2.9; 3.9; 6.9; 7.9; 8.9; 9.9; 10.9; 12.9; 14.9) pointing in the opposite direction, developing alternately into one another, **characterized in that** the first edge (1.1; 2.1; 4.1; 6.1; 8.1; 9.1; 14.1) has a greater length than the second edge (1.2; 2.2; 4.2; 5.2; 6.2; 8.2; 9.2; 10.2; 14.2), and the first edge (1.1; 2.1; 4.1; 6.1; 8.1; 9.1; 14.1) and the second edge (1.2; 2.2; 4.2; 5.2; 6.2; 8.2; 9.2; 10.2; 14.2) are connected to one another via a lateral surface (1.5; 8.5), which is formed by surface lines (8.17; 8.18; 10.17; 10.18; 12.17) connecting the first edge (1.1; 2.1; 4.1; 6.1; 8.1; 9.1; 14.1) and the second edge (1.2; 2.2; 4.2; 5.2; 6.2; 8.2; 9.2; 10.2; 14.2).

2. The deformation element (1.3; 2.3; 3.3; 4.3; 5.3; 6.3; 7.3; 8.3; 9.3; 10.3; 11.3; 12.3; 13.3; 14.3) according to Claim 1, **characterized in that** at least the first edge (1.1; 2.1; 4.1; 6.1; 8.1; 9.1; 14.1) has a kink-free wavy profile.

3. The deformation element (1.3; 2.3; 3.3; 4.3; 5.3; 6.3; 7.3; 8.3; 9.3; 10.3; 11.3; 12.3; 13.3; 14.3) according to Claim 1, **characterized in that** at least the first edge (1.1; 2.1; 4.1; 6.1; 8.1; 9.1; 14.1) has a kink in the region of the crown (9.20; 10.20) of the first bulges (1.8; 2.8; 3.8; 6.8; 7.8; 8.8; 9.8; 10.8; 12.8; 14.8) and/or the second bulges (1.9; 2.9; 3.9; 6.9; 7.9; 8.9; 9.9; 10.9; 12.9; 14.9).

4. The deformation element (1.3; 2.3; 3.3; 4.3; 5.3; 6.3; 7.3; 8.3; 9.3; 10.3; 11.3; 12.3; 13.3; 14.3) according to any one of Claims 1 to 3, **characterized in that** the second edge (1.2; 2.2; 4.2; 5.2; 6.2; 8.2; 9.2; 10.2; 14.2) has a profile without bulges, preferably a linear profile or an elliptical shape or polygonal shape, in particular a circular shape or a rectangular shape.

5. The deformation element (1.3; 2.3; 3.3; 4.3; 5.3; 6.3; 7.3; 8.3; 9.3; 10.3; 11.3; 12.3; 13.3; 14.3) according to any one of Claims 1 to 4, **characterized in that** the breakable body (1.4; 2.4; 3.4; 4.4; 5.4; 6.4; 7.4; 8.4; 10.4; 11.4; 14.4) has a belt (5.13; 5.14) or an impact plate (11.23), which is connected in a force-locking manner to the first edge (1.1; 2.1; 4.1; 6.1; 8.1; 9.1; 14.1) and/or the second edge (1.2; 2.2; 4.2; 5.2; 6.2; 8.2; 9.2; 10.2; 14.2), in particular by physical bonding or a form-fitting connection.

6. The deformation element (1.3; 2.3; 3.3; 4.3; 5.3; 6.3; 7.3; 8.3; 9.3; 10.3; 11.3; 12.3; 13.3; 14.3) according to any one of Claims 1 to 5, **characterized in that** at least two breakable bodies (1.4; 2.4; 3.4; 4.4; 5.4; 6.4; 7.4; 8.4; 10.4; 11.4; 14.4) are arranged side by side and parallel to one another, and the first bulges (1.8; 2.8; 3.8; 6.8; 7.8; 8.8; 9.8; 10.8; 12.8; 14.8) and second bulges (1.9; 2.9; 3.9; 6.9; 7.9; 8.9; 9.9; 10.9; 12.9; 14.9) of the first breakable body (1.4; 2.4; 3.4; 4.4; 5.4; 6.4; 7.4; 8.4; 10.4; 11.4; 14.4) run in synchronization with the first bulges (1.8; 2.8; 3.8; 6.8; 7.8; 8.8; 9.8; 10.8; 12.8; 14.8) and the second bulges (1.9; 2.9; 3.9; 6.9; 7.9; 8.9; 9.9; 10.9; 12.9; 14.9) of at least the second breakable body (1.4; 2.4; 3.4; 4.4; 5.4; 6.4; 7.4; 8.4; 10.4; 11.4; 14.4).

7. The deformation element (1.3; 2.3; 3.3; 4.3; 5.3; 6.3; 7.3; 8.3; 9.3; 10.3; 11.3; 12.3; 13.3; 14.3) according to any one of Claims 1 to 5, **characterized in that** at least two breakable bodies (1.4; 2.4; 3.4; 4.4; 5.4; 6.4; 7.4; 8.4; 10.4; 11.4; 14.4) are arranged side by side and parallel to one another, and the first bulges (1.8; 2.8; 3.8; 6.8; 7.8; 8.8; 9.8; 10.8; 12.8; 14.8) and second bulges (1.9; 2.9; 3.9; 6.9; 7.9; 8.9; 9.9; 10.9; 12.9; 14.9) of the first breakable body (1.4; 2.4; 3.4; 4.4; 5.4; 6.4; 7.4; 8.4; 10.4; 11.4; 14.4) run asynchronously in opposition to the first bulges (1.8; 2.8; 3.8; 6.8; 7.8; 8.8; 9.8; 10.8; 12.8; 14.8) and second bulges (1.9; 2.9; 3.9; 6.9; 7.9; 8.9; 9.9; 10.9; 12.9; 14.9) of at least the second breakable body (1.4; 2.4; 3.4; 4.4; 5.4; 6.4; 7.4; 8.4; 10.4; 11.4; 14.4).

8. The deformation element (1.3; 2.3; 3.3; 4.3; 5.3; 6.3; 7.3; 8.3; 9.3; 10.3; 11.3; 12.3; 13.3; 14.3) according to any one of Claims 1 to 7, **characterized in that** both the first edge (1.1; 2.1; 4.1; 6.1; 8.1; 9.1; 14.1) and the second edge (1.2; 2.2; 4.2; 5.2; 6.2; 8.2; 9.2; 10.2; 14.2) have a profile with first bulges (1.8; 2.8; 3.8; 6.8; 7.8; 8.8; 9.8; 10.8; 12.8; 14.8) and second bulges (1.9; 2.9; 3.9; 6.9; 7.9; 8.9; 9.9; 10.9; 12.9; 14.9) that alternately develop into one another.

9. The deformation element (1.3; 2.3; 3.3; 4.3; 5.3; 6.3; 7.3; 8.3; 9.3; 10.3; 11.3; 12.3; 13.3; 14.3) according to any one of Claims 1 to 8, **characterized in that** the lateral surface (1.5; 8.5) of the breakable body (1.4; 2.4; 3.4; 4.4; 5.4; 6.4; 7.4; 8.4; 10.4; 11.4; 14.4) develops along a straight line, which is perpendicular to the surface lines (8.17; 8.18; 10.17; 10.18; 12.17) of the first and second bulges (1.8; 2.8; 3.8; 6.8; 7.8; 8.8; 9.8; 10.8; 12.8; 14.8) (1.9; 2.9; 3.9; 6.9; 7.9; 8.9; 9.9; 10.9; 12.9; 14.9), so that the deformation element (1.3; 2.3; 3.3; 4.3; 5.3; 6.3; 7.3; 8.3; 9.3; 10.3; 11.3; 12.3; 13.3; 14.3) has a main linear direction of extent.

10. The deformation element (1.3; 2.3; 3.3; 4.3; 5.3; 6.3; 7.3; 8.3; 9.3; 10.3; 11.3; 12.3; 13.3; 14.3) according to any one of Claims 1 to 8, **characterized in that** the lateral surface (1.5; 8.5) of the breakable body (1.4; 2.4; 3.4; 4.4; 5.4; 6.4; 7.4; 8.4; 10.4; 11.4; 14.4) develops along a spiral so that the deformation element (1.3; 2.3; 3.3; 4.3; 5.3; 6.3; 7.3; 8.3; 9.3; 10.3; 11.3; 12.3; 13.3; 14.3) has a breakable body (1.4; 2.4; 3.4; 4.4; 5.4; 6.4; 7.4; 8.4; 10.4; 11.4; 14.4) formed by revolutions.

11. The deformation element (1.3; 2.3; 3.3; 4.3; 5.3; 6.3; 7.3; 8.3; 9.3; 10.3; 11.3; 12.3; 13.3; 14.3) according to any one of Claims 1 to 8, **characterized in that** the lateral surface (1.5; 8.5) of the breakable body (1.4; 2.4; 3.4; 4.4; 5.4; 6.4; 7.4; 8.4; 10.4; 11.4; 14.4) develops along a polygon or an ellipsoid, so that the deformation element (1.3; 2.3; 3.3; 4.3; 5.3; 6.3; 7.3; 8.3; 9.3; 10.3; 11.3; 12.3; 13.3; 14.3) has a cylindrical or conical breakable body (1.4; 2.4; 3.4; 4.4; 5.4; 6.4; 7.4; 8.4; 10.4; 11.4; 14.4).

12. The deformation element (1.3; 2.3; 3.3; 4.3; 5.3; 6.3; 7.3; 8.3; 9.3; 10.3; 11.3; 12.3; 13.3; 14.3) according to any one of Claims 1 to 11, **characterized in that** the breakable body (1.4; 2.4; 3.4; 4.4; 5.4; 6.4; 7.4; 8.4; 10.4; 11.4; 14.4) is produced from a flat blank in the form of a curved strip of a defined width, whose opposing curved longitudinal sides form the first edge (1.1; 2.1; 4.1; 6.1; 8.1; 9.1; 14.1) and the second edge (1.2; 2.2; 4.2; 5.2; 6.2; 8.2; 9.2; 10.2; 14.2) perpendicular to the plane of the blank following the placement of the first bulges (1.8; 2.8; 3.8; 6.8; 7.8; 8.8; 9.8; 10.8; 12.8; 14.8) and second bulges (1.9; 2.9; 3.9; 6.9; 7.9; 8.9; 9.9; 10.9; 12.9; 14.9).

13. The deformation element (1.3; 2.3; 3.3; 4.3; 5.3; 6.3; 7.3; 8.3; 9.3; 10.3; 11.3; 12.3; 13.3; 14.3) according to any one of Claims 1 to 7, **characterized in that** the breakable body (1.4; 2.4; 3.4; 4.4; 5.4; 6.4; 7.4; 8.4; 10.4; 11.4; 14.4) is formed by a hollow body running in the longitudinal axis (6.10; 8.10; 9.10; 10.10; 11.10; 12.10) of the deformation element (1.3; 2.3; 3.3; 4.3; 5.3; 6.3; 7.3; 8.3; 9.3; 10.3; 11.3; 12.3; 13.3; 14.3), having a first end (8.15; 11.15; 12.15; 13.15) and a second end (8.16; 9.16; 10.16; 11.16; 13.16) at an axial distance from the former, such that the first edge (1.1; 2.1; 4.1; 6.1; 8.1; 9.1; 14.1) is formed by the first end (8.15; 11.15; 12.15; 13.15), and the second edge (1.2; 2.2; 4.2; 5.2; 6.2; 8.2; 9.2; 10.2; 14.2) is formed by the second end (8.16; 9.16; 10.16; 11.16; 13.16).

14. The deformation element (1.3; 2.3; 3.3; 4.3; 5.3; 6.3; 7.3; 8.3; 9.3; 10.3; 11.3; 12.3; 13.3; 14.3) according to any one of Claims 13, **characterized in that** the first bulges (1.8; 2.8; 3.8; 6.8; 7.8; 8.8; 9.8; 10.8; 12.8; 14.8) and the second bulges (1.9; 2.9; 3.9; 6.9; 7.9; 8.9; 9.9; 10.9; 12.9; 14.9) run radially outside of the axial projection of the second edge (1.2; 2.2; 4.2; 5.2; 6.2; 8.2; 9.2; 10.2; 14.2).

15. The deformation element (1.3; 2.3; 3.3; 4.3; 5.3; 6.3; 7.3; 8.3; 9.3; 10.3; 11.3; 12.3; 13.3; 14.3) according to any one of Claims 13 or 14, **characterized in that** the first bulges (1.8; 2.8; 3.8; 6.8; 7.8; 8.8; 9.8; 10.8; 12.8; 14.8) run radially outside the axial projection of the first edge (1.1; 2.1; 4.1; 6.1; 8.1; 9.1; 14.1) and the second bulges (1.9; 2.9; 3.9; 6.9; 7.9; 8.9; 9.9; 10.9; 12.9; 14.9) run radially inside or on the axial projection of the first edge (1.1; 2.1; 4.1; 6.1; 8.1; 9.1; 14.1).

16. The deformation element (1.3; 2.3; 3.3; 4.3; 5.3; 6.3; 7.3; 8.3; 9.3; 10.3; 11.3; 12.3; 13.3; 14.3) according to any one of Claims 13 to 15, **characterized in that** the surface lines (8.17; 8.18; 10.17; 10.18; 12.17) forming the crown (9.20; 10.20) of the second bulges (1.9; 2.9; 3.9; 6.9; 7.9; 8.9; 9.9; 10.9; 12.9; 14.9) form an angle α with the longitudinal axis (6.10; 8.10; 9.10; 10.10; 11.10; 12. 10), wherein the angle α amounts to at least -20° and at most +20°, preferably at least -5° and at most +10°.

17. The deformation element (1.3; 2.3; 3.3; 4.3; 5.3; 6.3; 7.3; 8.3; 9.3; 10.3; 11.3; 12.3; 13.3; 14.3) according to any one of Claims 13 to 16, **characterized in that** the surface lines (8.17; 8.18; 10.17; 10.18; 12.17) forming the crown (9.20; 10.20) of the first bulges (1.8; 2.8; 3.8; 6.8; 7.8; 8.8; 9.8; 10.8; 12.8; 14.8) form an angle β with the longitudinal axis (6.10; 8.10; 9.10; 10.10; 11.10; 12.10), wherein the angle β amounts to at most +45°, preferably at most +35°.

18. The deformation element (1.3; 2.3; 3.3; 4.3; 5.3; 6.3; 7.3; 8.3; 9.3; 10.3; 11.3; 12.3; 13.3; 14.3) according to any one of Claims 1 to 17, **characterized in that** a hollow deformation body (11.22), which is preferably formed according to any one of Patent Claims 1 to 17, or which is formed by a cylindrical or conical pipe, is arranged inside the breakable body (1.4; 2.4; 3.4; 4.4; 5.4; 6.4; 7.4; 8.4; 10.4; 11.4; 14.4) in an axially parallel position.

19. A unit (12.24; 13.24) for absorption of kinetic energy, in particular the kinetic energy released in a crash of two collision partners, **characterized by** a plurality of deformation elements (1.3; 2.3; 3.3; 4.3; 5.3; 6.3; 7.3; 8.3; 9.3; 10.3; 11.3; 12.3; 13.3; 14.3) according to any one of Claims 1 to 18, these deformation elements being arranged between a common base plate (12.25; 13.25) and a common cover plate (12.26; 13.26).

20. A method for producing a deformation element according to any one of Claims 1 to 18, **characterized by** the following method steps:
a) providing a flat planar material blank, which is bordered by a first curved edge and a second curved edge running at a lateral distance from the first edge, wherein the first edge is longer than the second edge,
b) deflecting the material blank at a right angle to its plane with alternating orientations to form the first bulges and the second bulges, at least in the area of the first edge,
c) stabilizing the deformation element.

21. The method according to Claim 20, **characterized in that** the material blank is formed by a curved strip, and the strip is converted from the curved shape into a linear main direction of extent as a result of step b).

22. The method according to Claim 20, **characterized in that** the material blank is ellipsoidal, in particular circular, wherein the first edge forms the outside circumference of the material blank and the second edge is situated inside the first edge, preferably having an identical midpoint of curvature, and as a result of step b), the regions of the material blank situated between the first edge and the second edge are curved around the second edge, forming a hollow body, and are thereby deflected.

## Revendications

1. Élément de déformation (1.3 ; 2.3 ; 3.3 ; 4.3 ; 5.3 ; 6.3 ; 7.3 ; 8.3 ; 9.3 ; 10.3 ; 11.3 ; 12.3 ; 13.3 ; 14.3) pour l'absorption d'énergie cinétique, en particulier de l'énergie cinétique libérée lors d'une collision entre deux conducteurs, avec au moins un corps de rupture (1.4 ; 2.4 ; 3.4 ; 4.4 ; 5.4; 6.4; 7.4; 8.4; 9.4; 10.4; 11.4; 14.4) constitué d'une matière thermoplastique renforcée par des fibres, lequel comporte un premier bord (1.1 ; 2.1 ; 4.1 ; 6.1 ; 8.1 ; 9.1 ; 14.1) et une un deuxième bord (1.2 ; 2.2 ; 4.2 ; 5.2 ; 6.2 ; 8.2 ; 9.2 ; 10.2 ; 14.2) s'étendant à une distance latérale du premier bord (1.1 ; 2.1 ; 4.1 ; 6.1 ; 8.1 ; 9.1 ; 14.1), dans lequel au moins le premier bord (1.1 ; 2.1 ; 4.1 ; 6.1 ; 8.1 ; 9.1 ; 14.1) présente une étendue avec des premières échancrures (1.8 ; 2.8 ; 3.8 ; 6.8 ; 7.8 ; 8.8 ; 9.8 ; 10.8 ; 12.8 ; 14.8) et des deuxièmes échancrures (1.9 ; 2.9 ; 3.9 ; 6.9 ; 7.9 ; 8.9 ; 9.9 ; 10.9 ; 12.9 ; 14.9) orientées de façon opposée, lesquelles s'enchaînent de façon alternée, **caractérisé en ce que** le premier bord (1.1 ; 2.1 ; 4.1 ; 6.1 ; 8.1 ; 9.1 ; 14.1) présente une longueur supérieure à celle du deuxième bord (1.2 ; 2.2 ; 4.2 ; 5.2 ; 6.2 ; 8.2 ; 9.2 ; 10.2 ; 14.2) et **en ce que** le premier bord (1.1 ; 2.1 ; 4.1 ; 6.1 ; 8.1 ; 9.1 ; 14.1) et le deuxième bord (1.2 ; 2.2 ; 4.2 ; 5.2 ; 6.2 ; 8.2 ; 9.2 ; 10.2 ; 14.2) sont reliés entre eux par le biais d'une surface d'enveloppe (1.5 ; 8.5) formée par des lignes d'enveloppe (8.17 ; 8.18 ; 10.17 ; 10.18 ; 12.17) reliant le premier bord (1.1 ; 2.1 ; 4.1 ; 6.1 ; 8.1 ; 9.1 ; 14.1) et le deuxième bord (1.2 ; 2.2 ; 4.2 ; 5.2 ; 6.2 ; 8.2 ; 9.2 ; 10.2 ; 14.2).

2. Élément de déformation (1.3 ; 2.3 ; 3.3 ; 4.3 ; 5.3 ; 6.3 ; 7.3 ; 8.3 ; 9.3 ; 10.3 ; 11.3 ; 12.3 ; 13.3 ; 14.3) selon la revendication 1, **caractérisé en ce qu'**au moins le premier bord (1.1 ; 2.1 ; 4.1 ; 6.1 ; 8.1 ; 9.1 ; 14.1) présente une étendue ondulée sans coude.

3. Élément de déformation (1.3 ; 2.3 ; 3.3 ; 4.3 ; 5.3 ; 6.3 ; 7.3 ; 8.3 ; 9.3 ; 10.3 ; 11.3 ; 12.3 ; 13.3 ; 14.3) selon la revendication 1, **caractérisé en ce qu'**au moins le premier bord (1.1 ; 2.1 ; 4.1 ; 6.1 ; 8.1 ; 9.1 ; 14.1) comporte respectivement un pli dans la région des sommets (9.20 ; 10.20) des premières échancrures (1.8 ; 2.8 ; 3.8 ; 6.8 ; 7.8 ; 8.8 ; 9.8 ; 10.8 ; 12.8 ; 14.8) et/ou des deuxièmes échancrures (1.9 ; 2.9 ; 3.9 ; 6.9 ; 7.9; 8.9; 9.9; 10.9; 12.9 ; 14.9).

4. Élément de déformation (1.3 ; 2.3 ; 3.3 ; 4.3 ; 5.3 ; 6.3 ; 7.3 ; 8.3 ; 9.3 ; 10.3; 11.3; 12.3 ; 13.3; 14.3) selon l'une des revendications 1 à 3, **caractérisé en ce que** le deuxième bord (1.2 ; 2.2 ; 4.2 ; 5.2 ; 6.2 ; 8.2 ; 9.2 ; 10.2 ; 14.2) présente une étendue sans échancrures, de préférence une étendue linéaire ou elliptique ou polygonale, en particulier circulaire ou rectangulaire.

5. Élément de déformation (1.3 ; 2.3 ; 3.3 ; 4.3 ; 5.3 ; 6.3 ; 7.3 ; 8.3 ; 9.3 ; 10.3; 11.3; 12.3; 13.3; 14.3) selon l'une des revendications 1 à 4, **caractérisé en ce que** le corps de rupture (1.4 ; 2.4 ; 3.4 ; 4.4 ; 5.4 ; 6.4 ; 7.4 ; 8.4 ; 9.4 ; 10.4 ; 11.4 ; 14.4) comporte une sangle (5.13 ; 5.14) ou une plaque d'impact (11.23), laquelle est reliée par adhérence au premier bord (1.1 ; 2.1 ; 4.1 ; 6.1 ; 8.1 ; 9.1 ; 14.1) et/ou au deuxième bord (1.2 ; 2.2 ; 4.2 ; 5.2 ; 6.2 ; 8.2 ; 9.2 ; 10.2 ; 14.2), en particulier par liaison de matière ou par complémentarité de forme.

6. Élément de déformation (1.3 ; 2.3 ; 3.3 ; 4.3 ; 5.3 ; 6.3 ; 7.3 ; 8.3 ; 9.3 ; 10.3; 11.3; 12.3; 13.3; 14.3) selon l'une des revendications 1 à 5, **caractérisé en ce qu'**au moins deux corps de rupture (1.4 ; 2.4 ; 3.4 ; 4.4; 5.4; 6.4; 7.4; 8.4 ; 9.4; 10.4; 11.4; 14.4) sont agencés parallèlement l'un à côté de l'autre, et les premières échancrures (1.8 ; 2.8 ; 3.8 ; 6.8 ; 7.8 ; 8.8 ; 9.8 ; 10.8 ; 12.8 ; 14.8) ainsi que les deuxièmes échancrures (1.9 ; 2.9; 3.9; 6.9 ; 7.9 ; 8.9 ; 9.9 ; 10.9; 12.9 ; 14.9) du premier corps de rupture (1.4 ; 2.4 ; 3.4 ; 4.4 ; 5.4 ; 6.4 ; 7.4 ; 8.4 ; 9.4 ; 10.4; 11.4 ; 14.4) s'étendent de façon synchrone avec les premières échancrures (1.8 ; 2.8 ; 3.8 ; 6.8 ; 7.8 ; 8.8 ; 9.8 ; 10.8 ; 12.8 ; 14.8) et les deuxièmes échancrures (1.9 ; 2.9 ; 3.9 ; 6.9 ; 7.9 ; 8.9 ; 9.9 ; 10.9 ; 12.9 ; 14.9) de l'au moins deuxième corps de rupture (1.4 ; 2.4 ; 3.4 ; 4.4 ; 5.4 ; 6.4 ; 7.4 ; 8.4 ; 9.4 ; 10.4 ; 11.4 ; 14.4).

7. Élément de déformation (1.3 ; 2.3 ; 3.3 ; 4.3 ; 5.3 ; 6.3 ; 7.3 ; 8.3 ; 9.3 ; 10.3; 11.3; 12.3; 13.3; 14.3) selon l'une des revendications 1 à 5, **caractérisé en ce qu'**au moins deux corps de rupture (1.4 ; 2.4 ; 3.4 ; 4.4; 5.4; 6.4; 7.4; 8.4 ; 9.4; 10.4; 11.4; 14.4) sont agencés parallèlement l'un à côté de l'autre, et les premières échancrures (1.8 ; 2.8 ; 3.8 ; 6.8 ; 7.8 ; 8.8 ; 9.8 ; 10.8 ; 12.8 ; 14.8) ainsi que les deuxièmes échancrures (1.9 ; 2.9; 3.9; 6.9 ; 7.9 ; 8.9; 9.9 ; 10.9 ; 12.9 ; 14.9) du premier corps de rupture (1.4 ; 2.4 ; 3.4 ; 4.4 ; 5.4 ; 6.4 ; 7.4 ; 8.4 ; 9.4 ; 10.4; 11.4 ; 14.4) s'étendent de façon asynchrone et opposée par rapport aux premières échancrures (1.8 ; 2.8 ; 3.8 ; 6.8 ; 7.8 ; 8.8 ; 9.8 ; 10.8 ; 12.8 ; 14.8) et aux deuxièmes échancrures (1.9 ; 2.9 ; 3.9 ; 6.9 ; 7.9; 8.9; 9.9; 10.9; 12.9; 14.9) de l'au moins deuxième corps de rupture (1.4 ; 2.4 ; 3.4 ; 4.4 ; 5.4 ; 6.4 ; 7.4 ; 8.4 ; 9.4 ; 10.4 ; 11.4 ; 14.4).

8. Élément de déformation (1.3 ; 2.3 ; 3.3 ; 4.3 ; 5.3 ; 6.3 ; 7.3 ; 8.3 ; 9.3 ; 10.3; 11.3 ; 12.3; 13.3; 14.3) selon l'une des revendications 1 à 7, **caractérisé en ce qu'**aussi bien le premier bord (1.1 ; 2.1 ; 4.1 ; 6.1 ; 8.1 ; 9.1 ; 14.1) que le deuxième bord (1.2 ; 2.2 ; 4.2 ; 5.2 ; 6.2 ; 8.2 ; 9.2 ; 10.2 ; 14.2) présentent une étendue avec des premières échancrures (1.8 ; 2.8 ; 3.8 ; 6.8 ; 7.8 ; 8.8 ; 9.8 ; 10.8 ; 12.8 ; 14.8) et des deuxièmes échancrures (1.9 ; 2.9 ; 3.9 ; 6.9 ; 7.9 ; 8.9 ; 9.9 ; 10.9 ; 12.9 ; 14.9) qui s'enchaînent de façon alternée.

9. Élément de déformation (1.3 ; 2.3 ; 3.3 ; 4.3 ; 5.3 ; 6.3 ; 7.3 ; 8.3 ; 9.3 ; 10.3; 11.3; 12.3; 13.3; 14.3) selon l'une des revendications 1 à 8, **caractérisé en ce que** la surface d'enveloppe (1.5 ; 8.5) du corps de rupture (1.4 ; 2.4 ; 3.4 ; 4.4 ; 5.4 ; 6.4 ; 7.4 ; 8.4 ; 9.4 ; 10.4 ; 11.4 ; 14.4) évolue le long d'une droite perpendiculaire aux lignes d'enveloppe (8.17 ; 8.18 ; 10.17 ; 10.18 ; 12.17) des premières (1.8 ; 2.8 ; 3.8 ; 6.8 ; 7.8 ; 8.8 ; 9.8 ; 10.8 ; 12.8 ; 14.8) et deuxièmes échancrures (1.9 ; 2.9 ; 3.9 ; 6.9 ; 7.9 ; 8.9 ; 9.9 ; 10.9 ; 12.9; 14.9), de sorte que l'élément de déformation (1.3 ; 2.3; 3.3; 4.3 ; 5.3 ; 6.3 ; 7.3 ; 8.3 ; 9.3 ; 10.3 ; 11.3; 12.3 ; 13.3 ; 14.3) présente une direction d'extension principale linéaire.

10. Élément de déformation (1.3 ; 2.3 ; 3.3 ; 4.3 ; 5.3 ; 6.3 ; 7.3 ; 8.3 ; 9.3 ; 10.3; 11.3; 12.3; 13.3; 14.3) selon l'une des revendications 1 à 8, **caractérisé en ce que** la surface d'enveloppe (1.5 ; 8.5) du corps de rupture (1.4 ; 2.4 ; 3.4 ; 4.4 ; 5.4 ; 6.4 ; 7.4 ; 8.4 ; 9.4 ; 10.4 ; 11.4 ; 14.4) évolue le long d'une spirale, l'élément de déformation (1.3 ; 2.3 ; 3.3 ; 4.3 ; 5.3 ; 6.3 ; 7.3 ; 8.3 ; 9.3 ; 10.3 ; 11.3 ; 12.3 ; 13.3 ; 14.3) présentant ainsi un corps de rupture (1.4 ; 2.4 ; 3.4 ; 4.4 ; 5.4 ; 6.4 ; 7.4 ; 8.4 ; 9.4 ; 10.4 ; 11.4 ; 14.4) formé par des boucles.

11. Élément de déformation (1.3 ; 2.3 ; 3.3 ; 4.3 ; 5.3 ; 6.3 ; 7.3 ; 8.3 ; 9.3 ; 10.3; 11.3; 12.3; 13.3; 14.3) selon l'une des revendications 1 à 8, **caractérisé en ce que** la surface d'enveloppe (1.5 ; 8.5) du corps de rupture (1.4 ; 2.4 ; 3.4 ; 4.4 ; 5.4 ; 6.4 ; 7.4 ; 8.4 ; 9.4 ; 10.4 ; 11.4 ; 14.4) évolue le long d'un polygone ou d'un ellipsoïde, l'élément de déformation (1.3 ; 2.3 ; 3.3 ; 4.3 ; 5.3 ; 6.3 ; 7.3 ; 8.3 ; 9.3; 10.3; 11.3 ; 12.3 ; 13.3; 14.3) présentant ainsi un corps de rupture (1.4 ; 2.4 ; 3.4 ; 4.4 ; 5.4 ; 6.4 ; 7.4 ; 8.4 ; 9.4 ; 10.4 ; 11.4 ; 14.4) cylindrique ou conique.

12. Élément de déformation (1.3 ; 2.3 ; 3.3 ; 4.3 ; 5.3 ; 6.3 ; 7.3 ; 8.3 ; 9.3 ; 10.3; 11.3; 12.3; 13.3; 14.3) selon l'une des revendications 1 à 11, **caractérisé en ce que** le corps de rupture (1.4 ; 2.4 ; 3.4 ; 4.4 ; 5.4 ; 6.4 ; 7.4 ; 8.4 ; 9.4 ; 10.4 ; 11.4 ; 14.4) est réalisé à partir d'une découpe plane sous la forme d'une bande arquée d'une largeur définie, dont les côtés longitudinaux courbes opposés forment le premier bord (1.1 ; 2.1 ; 4.1 ; 6.1 ; 8.1 ; 9.1 ; 14.1) et le deuxième bord (1.2 ; 2.2 ; 4.2 ; 5.2 ; 6.2 ; 8.2 ; 9.2 ; 10.2 ; 14.2) perpendiculairement au plan de la découpe, au cours de la disposition des premières (1.8 ; 2.8 ; 3.8 ; 6.8 ; 7.8 ; 8.8 ; 9.8 ; 10.8 ; 12.8 ; 14.8) et deuxièmes échancrures (1.9 ; 2.9 ; 3.9 ; 6.9 ; 7.9 ; 8.9 ; 9.9; 10.9; 12.9 ; 14.9).

13. Élément de déformation (1.3 ; 2.3 ; 3.3 ; 4.3 ; 5.3 ; 6.3 ; 7.3 ; 8.3 ; 9.3 ; 10.3; 11.3; 12.3; 13.3; 14.3) selon l'une des revendications 1 à 7, **caractérisé en ce que** le corps de rupture (1.4 ; 2.4 ; 3.4 ; 4.4 ; 5.4 ; 6.4 ; 7.4 ; 8.4 ; 9.4 ; 10.4 ; 11.4 ; 14.4) est formé par un corps creux s'étendant dans l'axe longitudinal (6.10 ; 8.10; 9.10; 10.10; 11.10; 12.10) de l'élément de déformation (1.3 ; 2.3 ; 3.3 ; 4.3 ; 5.3 ; 6.3 ; 7.3 ; 8.3 ; 9.3 ; 10.3 ; 11.3 ; 12.3 ; 13.3 ; 14.3), lequel présente une première extrémité (8.15 ; 11.15 ; 12.15 ; 13.15) et une deuxième extrémité (8.16 ; 9.16 ; 10.16 ; 11.16 ; 13.16) axialement espacée de celle-ci, le premier bord (1.1 ; 2.1 ; 4.1 ; 6.1 ; 8.1 ; 9.1 ; 14.1) étant formé par la première extrémité (8.15 ; 11.15 ; 12.15 ; 13.15) et le deuxième bord (1.2 ; 2.2 ; 4.2 ; 5.2 ; 6.2 ; 8.2 ; 9.2 ; 10.2 ; 14.2) par la deuxième extrémité (8.16 ; 9.16; 10.16 ; 11.16; 13.16).

14. Élément de déformation (1.3 ; 2.3 ; 3.3 ; 4.3 ; 5.3 ; 6.3 ; 7.3 ; 8.3 ; 9.3 ; 10.3 ; 11.3 ; 12.3 ; 13.3 ; 14.3) selon la revendication 13, **caractérisé en ce que** les premières échancrures (1.8 ; 2.8 ; 3.8 ; 6.8 ; 7.8 ; 8.8 ; 9.8 ; 10.8 ; 12.8 ; 14.8) et les deuxièmes échancrures (1.9 ; 2.9 ; 3.9 ; 6.9 ; 7.9 ; 8.9 ; 9.9 ; 10.9 ; 12.9 ; 14.9) s'étendent radialement à l'extérieur de la projection axiale du premier bord (1.1 ; 2.1 ; 4.1 ; 6.1 ; 8.1 ; 9.1 ; 14.1), et les deuxièmes échancrures (1.9 ; 2.9 ; 3.9 ; 6.9 ; 7.9 ; 8.9 ; 9.9 ; 10.9 ; 12.9 ; 14.9) s'étendant radialement à l'intérieur de la projection axiale du premier bord (1.1 ; 2.1 ; 4.1 ; 6.1 ; 8.1 ; 9.1 ; 14.1) ou sur celle-ci.

16. Élément de déformation (1.3 ; 2.3 ; 3.3 ; 4.3 ; 5.3 ; 6.3 ; 7.3 ; 8.3 ; 9.3 ; 10.3 ; 11.3 ; 12.3 ; 13.3 ; 14.3) selon l'une des revendications 13 à 15, **caractérisé en ce que** les lignes d'enveloppe (8.17 ; 8.18 ; 10.17 ; 10.18 ; 12.17) formant le sommet (9.20 ; 10.20) des deuxièmes échancrures (1.9 ; 2.9 ; 3.9 ; 6.9 ; 7.9 ; 8.9 ; 9.9 ; 10.9 ; 12.9 ; 14.9) forment un angle α avec l'axe longitudinal (6.10 ; 8.10 ; 9.10 ; 10.10 ; 11.10; 12.10), l'angle a mesurant au minimum -20° et au maximum +20°, de préférence au minimum -5° et au maximum +10°.

17. Élément de déformation (1.3 ; 2.3 ; 3.3 ; 4.3 ; 5.3 ; 6.3 ; 7.3 ; 8.3 ; 9.3 ; 10.3 ; 11.3 ; 12.3 ; 13.3 ; 14.3) selon l'une des revendications 13 à 16, **caractérisé en ce que** les lignes d'enveloppe (8.17 ; 8.18 ; 10.17 ; 10.18 ; 12.17) formant le sommet (9.20 ; 10.20) des premières échancrures (1.8 ; 2.8 ; 3.8 ; 6.8 ; 7.8 ; 8.8 ; 9.8 ; 10.8 ; 12.8 ; 14.8) incluent un angle β avec l'axe longitudinal (6.10 ; 8.10 ; 9.10 ; 10.10 ; 11.10 ; 12.10), l'angle β mesurant au maximum +45°, de préférence au maximum +35°.

18. Élément de déformation (1.3 ; 2.3 ; 3.3 ; 4.3 ; 5.3 ; 6.3 ; 7.3 ; 8.3 ; 9.3 ; 10.3; 11.3; 12.3; 13.3; 14.3) selon l'une des revendications 1 à 17, **caractérisé en ce qu'**un corps de déformation creux (11.22) est agencé dans une position parallèle à l'axe, lequel est de préférence conçu selon l'une des revendications 1 à 17 ou lequel est constitué d'un tuyau cylindrique ou conique.

19. Unité (12.24 ; 13.24) destinée à absorber une énergie cinétique, en particulier l'énergie libérée lors d'une collision entre deux conducteurs, **caractérisée par** plusieurs éléments de déformation (1.3 ; 2.3 ; 3.3 ; 4.3 ; 5.3 ; 6.3 ; 7.3 ; 8.3 ; 9.3 ; 10.3 ; 11.3 ; 12.3 ; 13.3 ; 14.3) selon l'une des revendications 1 à 18, lesquels sont agencés entre une plaque de base commune (12.25 ; 13.25) et une plaque de couverture commune (12.26 ; 13.26).

20. Procédé pour la réalisation d'un élément de déformation selon l'une des revendications 1 à 18, **caractérisé par** les étapes de procédé suivantes :
a) mise à disposition d'une découpe de matériau plane, laquelle est délimitée par un premier bord courbe et par un deuxième bord courbe s'étendant à une distance latérale du premier bord, le premier bord étant plus long que le deuxième bord,
b) déflexion de la découpe de matériau perpendiculairement à son plan avec une orientation mutuelle, pour former des premières échancrures et des deuxièmes échancrures, au moins dans la région du premier bord,
c) consolidation de l'élément de déformation.

21. Procédé selon la revendication 20, **caractérisé en ce que** la découpe de matériau est formée par une bande arquée, et la bande est placée dans une direction d'extension principale linéaire par la forme arquée au cours de l'étape b).

22. Procédé selon la revendication 20, **caractérisé en ce que** la découpe de matériau est ellipsoïdale, en particulier circulaire, le premier bord formant le pourtour extérieur de la découpe de matériau et le deuxième bord s'étendant à l'intérieur du premier bord, de préférence avec un centre de courbure identique, et les régions de la découpe de matériau s'étendant entre le premier bord et le deuxième bord étant recourbées par-dessus le deuxième bord tout en formant un corps creux, et ainsi défléchies.
